(19) Europäisches Patentamt
European Patent Office
Office européen des brevets

(11) EP 3 584 611 A1

(12) # EUROPEAN PATENT APPLICATION
published in accordance with Art. 153(4) EPC

(43) Date of publication:
**25.12.2019 Bulletin 2019/52**

(21) Application number: **18777684.4**

(22) Date of filing: **15.03.2018**

(51) Int Cl.:
***G02B 5/02*** *(2006.01)* ***G02F 1/1335*** *(2006.01)*
***G09F 9/00*** *(2006.01)*

(86) International application number:
**PCT/JP2018/010212**

(87) International publication number:
**WO 2018/180541 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2017 JP 2017069529**

(71) Applicant: **Tomoegawa Co., Ltd.**
**Tokyo 104-8335 (JP)**

(72) Inventors:
- **KATO Masao**
  **Shizuoka-shi**
  **Shizuoka 421-0192 (JP)**
- **SUGIYAMA Masahide**
  **Shizuoka-shi**
  **Shizuoka 421-0192 (JP)**
- **SAKANO Tsubasa**
  **Shizuoka-shi**
  **Shizuoka 421-0192 (JP)**

(74) Representative: **V.O.**
**P.O. Box 87930**
**2508 DH Den Haag (NL)**

(54) **ANTI-GLARE FILM AND DISPLAY DEVICE**

(57) A display device including an anti-glare film containing: at least an anti-glare layer 1 in which a first surface 1a is an uneven surface; and an anisotropic light diffusion layer 3 provided on a second surface 1b side of the anti-glare layer 1, wherein the anisotropic light diffusion layer 3 includes a matrix region and a plurality of pillar regions having refractive indices different from that of the matrix region, the pillar regions extend from one surface side toward the other surface side of the anisotropic light diffusion layer 3, and an average height of the pillar regions in a thickness direction of the anisotropic light diffusion layer 3 is 80% or more of a thickness of the anisotropic light diffusion layer 3 suppresses the occurrence of scintillation and the decrease in front contrast.

FIG. 1

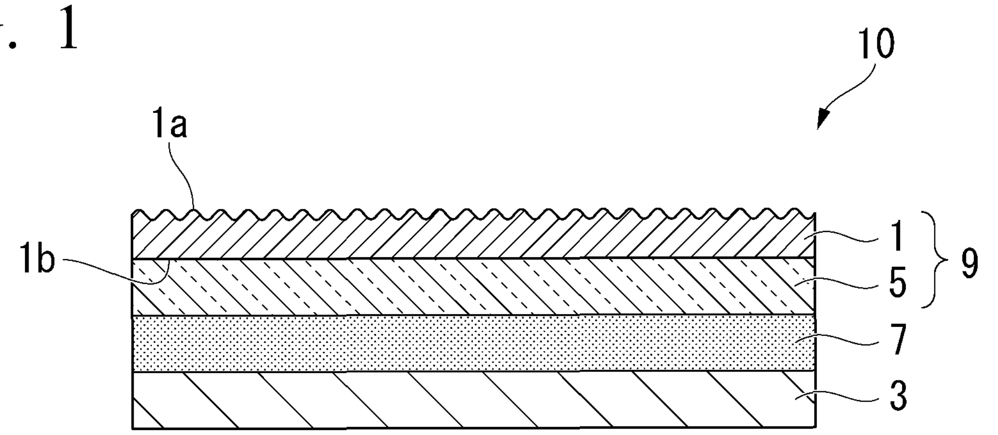


EP 3 584 611 A1

## Description

TECHNICAL FIELD

The present invention relates to an anti-glare film and a display device. Priority is claimed on Japanese Patent Application No. 2017-069529, filed March 31, 2017, the content of which is incorporated herein by reference.

BACKGROUND OF THE INVENTION

In display devices such as LCD, PDP, CRT and EL, an anti-glare layer whose surface is an uneven surface is disposed on the outermost surface of the display in order to prevent glare due to the reflection of external light and to improve visibility.

However, when there is an anti-glare layer on the outermost surface, a phenomenon called scintillation (glaring phenomenon where bright spots are seen at random) occurs to lower the visibility, which has been a problem. This phenomenon occurs when the uneven pitch on the surface of the anti-glare layer interferes with the pixel pitch of the display device, thereby causing a certain pixel located at the focal point of the lens formed by the curvature of the surface irregularities to appear particularly bright.

To address this problem, a technique has been proposed in which scattering particles having scattering effects (internal scattering properties) are added into the anti-glare layer where surface irregularities are formed by the anti-glare particles (Patent Document 1).

In the technique of Patent Document 1, it is configured so that the occurrence of scintillation can be suppressed due to disturbance of the straightness of light in the anti-glare layer by the scattering particles. However, when this technique is applied to a display device that leaks light in an oblique direction at the time of black display, a portion of the light from the oblique direction is scattered in the front direction by the action of the scattering particles, thereby increasing the black luminance and decreasing the front contrast, which has been a problem.

To address this problem, a technique has been proposed in which in an anti-glare film having an internal scattering layer composed of a transparent matrix and a transparent dispersed material, and surface irregularities, the dispersed material is configured to have a refractive index different from that of the transparent matrix and scattering anisotropy due to the anisotropic shape, and is dispersed in a positional relationship substantially parallel to each other in the normal direction of the film (Patent Document 2).

The technique of Patent Document 2 has a feature (anisotropy) in light scattering characteristics that the scattering property is strong for incident light from the front direction and the scattering property is weak for incident light from an oblique direction. As a result, since incident light from an oblique direction cannot change its direction to the front direction, it is also possible to suppress the decrease in front contrast, in addition to the prevention of the occurrence of scintillation.

Further, a technique has been proposed in which using an anti-glare film provided with a scattering control film having different scattering characteristics depending on the azimuths instead of the internal scattering layer, a specific azimuth with a large light leakage quantity in the display unit at the time of black display, and a predetermined azimuth with a low light scattering property of the anti-glare film are made to substantially coincide (anisotropy with respect to the azimuth is provided) (Patent Document 3). As a scattering control film, "Lumisty" manufactured by Sumitomo Chemical Co., Ltd. is used. "Lumisty" is an anisotropic light diffusing film whose diffusibility changes depending on the incident angle of light. In Patent Document 3, two scattering control films are arranged in a stack so that the scattering axes are orthogonal to each other.

In the technique of Patent Document 3, it is configured so that it is possible to suppress the light entering from the azimuth with a large light leakage quantity to the anti-glare film at the time of black display from changing its direction in the front direction, and the decrease in front contrast due to the increase in black luminance can be suppressed.

DOCUMENTS OF RELATED ART

Patent Documents

Patent Document 1: Japanese Unexamined Patent Application, First Publication No. 2001-91707
Patent Document 2: Japanese Unexamined Patent Application, First Publication No. 2003-202416
Patent Document 3: Japanese Unexamined Patent Application, First Publication No. 2007-304436

## SUMMARY OF THE INVENTION

## PROBLEMS TO BE SOLVED BY THE INVENTION

However, even with the techniques of Patent Documents 2 and 3, the effect of suppressing the decrease in front contrast is not sufficient.

The present invention aims to provide an anti-glare film which can suppress the occurrence of scintillation and the decrease in front contrast in a display device, and a display device using the same.

## MEANS TO SOLVE THE PROBLEMS

The present invention includes the following aspects.

[1] An anti-glare film including at least: an anti-glare layer in which a first surface is an uneven surface; and an anisotropic light diffusion layer provided on a side of a second surface opposite to a side of the first surface of the anti-glare layer, characterized in that
the anisotropic light diffusion layer includes a matrix region and a plurality of pillar regions having refractive indices different from that of the matrix region,
the pillar regions extend from one surface side toward the other surface side of the anisotropic light diffusion layer, and an average height of the pillar regions in a thickness direction of the anisotropic light diffusion layer is 80% or more of a thickness of the anisotropic light diffusion layer.
[2] The anti-glare film according to [1], wherein an average value of normal direction transmission ratios in azimuths determined by the following formula (I) when light is made incident on the anisotropic light diffusion layer at an angle inclined by 75° from the normal direction of the anisotropic light diffusion layer is 0.02% or less.

$$\text{Normal direction transmission ratio} = (\text{transmitted light quantity in the normal direction of the anisotropic light diffusion layer (cd)}) / (\text{transmitted light quantity in a linear direction of incident light (cd)}) \times 100 \quad (I)$$

[3] The anti-glare film according to [1] or [2], wherein an arithmetic average roughness (Ra) of the first surface of the anti-glare layer is from 0.05 μm to 1.00 μm.
[4] The anti-glare film according to any one of [1] to [3], wherein a thickness of the anti-glare layer is from 1 to 25 μm, and a thickness of the anisotropic light diffusion layer is from 10 to 200 μm.
[5] The anti-glare film according to any one of [1] to [4], wherein the anisotropic light diffusion layer includes a scattering central axis, and
a scattering central axis angle which is a polar angle θ formed between a normal line of the anisotropic light diffusion layer and the scattering central axis is from -45° to + 45°.
[6] A display device including the anti-glare film according to any one of [1] to [5].

## EFFECTS OF THE INVENTION

According to the present invention, it is possible to provide an anti-glare film which can suppress the occurrence of scintillation and the decrease in front contrast in a display device, and a display device using the same.

## BRIEF DESCRIPTION OF DRAWINGS

FIG. 1 is a schematic cross-sectional view showing an embodiment of an anti-glare film of the present invention.
FIG. 2 is a schematic cross-sectional view showing an example of an anisotropic light diffusion layer.
FIG. 3 is a schematic cross-sectional view showing another example of the anti-glare film of the present invention.
FIG. 4 is a schematic cross-sectional view showing another example of the anti-glare film of the present invention.
FIG. 5A is a schematic view showing a structure of an anisotropic light diffusion layer having a bar-like pillar region and a state of transmitted light incident on the anisotropic light diffusion layer.

FIG. 5B is a schematic view showing a structure of an anisotropic light diffusion layer having a plate-like region and a state of transmitted light incident on the anisotropic light diffusion layer.
FIG. 6 is an explanatory view showing a method of evaluating light diffusibility of the anisotropic light diffusion layer.
FIG. 7 is a graph showing a relationship between the incident light angle and the linear transmittance in the anisotropic light diffusion layer having a bar-like pillar region shown in FIG. 5A.
FIG. 8 is a three-dimensional polar coordinate expression for explaining a scattering central axis of the anisotropic light diffusion layer.
FIG. 9 is a view for explaining a method of measuring light transmitted through an anisotropic light diffusion layer.

EMBODIMENTS FOR CARRYING OUT THE INVENTION

The meanings of the main terms in the present specification and claims are as follows.
The "anisotropic light diffusion layer" is a light diffusion layer whose diffusibility changes according to the incident light angle. That is, it is a light diffusion layer having a dependency of light diffusibility on the incident light angle in which the linear transmittance changes depending on the incident light angle.
The "linear transmittance" is a ratio of the transmitted light quantity in a linear direction (linear transmitted light quantity) to the quantity of incident light (incident light quantity) when light is incident on the anisotropic light diffusion layer at a certain incident light angle, and is represented by the following formula. The linear direction indicates an advancing direction of the incident light. The linear transmitted light quantity can be measured by the method described in Japanese Unexamined Patent Application, First Publication No. 2015-191178.

$$\text{Linear transmittance } (\%) = ((\text{linear transmitted light quantity}) / (\text{incident light quantity})) \times 100$$

The "maximum linear transmittance" is a linear transmittance of incident light at an incident light angle where the linear transmittance is maximal. The "minimum linear transmittance" is a linear transmittance of incident light at an incident light angle where the linear transmittance is minimal.
The term "scattering central axis" refers to a direction that coincides with an incident light angle of light where the light diffusibility has a substantially symmetric property with respect to the incident light angle when the incident light angle onto the anisotropic light diffusion layer is changed. Here, the reason why it is described as "substantially symmetric property" is that the optical characteristic ("optical profile" to be described later) does not have a symmetric property in a strict sense, when the scattering central axis has an inclination with respect to the normal direction of the anisotropic light diffusion layer. The scattering central axis can be confirmed from the incident light angle which has a substantially symmetric property in the optical profile.
Here, the light diffusibility of the anisotropic light diffusion layer will be more specifically described with reference to FIGS. 5 to 7. Here, an anisotropic light diffusion layer 110 having a bar-like pillar region (also referred to as a columnar structure) is taken as an example, and will be described in contrast to light diffusibility of an anisotropic light diffusion layer 120 having a plate-like region (also referred to as a tabular structure) instead of the pillar region. FIG. 5A and FIG. 5B are schematic views showing the structure of each of the anisotropic light diffusion layers 110 and 120 and the state of transmitted light incident on these anisotropic light diffusion layers. Reference numerals 111 and 121 in FIGS. 5A and 5B denote matrix regions, a reference numeral 113 denotes a columnar structure, and a reference numeral 123 denotes a tabular structure. FIG. 6 is an explanatory view showing a method of evaluating the light diffusibility of the anisotropic light diffusion layer. FIG. 7 is a graph showing the relationship between the incident light angle and the linear transmittance in the anisotropic light diffusion layer 110 shown in FIG. 5A.
The evaluation method of light diffusibility is performed as follows. First, as shown in FIG. 6, the anisotropic light diffusion layer (anisotropic optical film) 110 is disposed between a light source 201 and a detector 202. In the present embodiment, the incident light angle is set to 0° when irradiation light I from the light source 201 is incident from the normal direction of the anisotropic light diffusion layer 110. Further, the anisotropic light diffusion layer 110 is disposed so as to be arbitrarily rotatable about a straight line L serving as the center, and the light source 201 and the detector 202 are fixed. That is, according to this method, a sample (anisotropic light diffusion layer 110) is disposed between the light source 201 and the detector 202, and the linear transmitted light quantity which advances straight and penetrates through the sample and enters the detector 202 is measured while changing the angle with the straight line L of the sample surface as the central axis, thereby deriving the linear transmittance.
FIG. 7 shows the evaluation result of light diffusibility of the anisotropic light diffusion layer 110 obtained by evaluating the light diffusibility in the case of selecting TD (the axis in the width direction of the anisotropic optical film) in FIG. 5A as the straight line L of the rotation center shown in FIG. 6. That is, it shows the incident light angle dependency

of the light diffusibility (light scattering properties) of the anisotropic light diffusion layer 110 measured using the method shown in FIG. 6. The vertical axis in FIG. 7 represents the linear transmittance, which is an index indicating the degree of scattering (in the present embodiment, when parallel rays of a predetermined light quantity are made incident, a ratio of the light quantity of the parallel rays emitted in the same direction as the incident direction; more specifically, linear transmittance = (quantity of light detected by the detector 202 in the presence of the anisotropic light diffusion layer 110) / (quantity of light detected by the detector 202 in the absence of the anisotropic light diffusion layer 110)), and the horizontal axis represents the incident light angle to the anisotropic light diffusion layer 110. It should be noted that positive and negative values of the incident light angle indicate opposite directions for rotating the anisotropic light diffusion layer 110.

When the direction of light incident on the anisotropic light diffusion layer 110 at a predetermined incident light angle is substantially parallel to the azimuth direction of a region having a refractive index different from that of the matrix region (extension direction of the columnar structure 113), light is preferentially diffused, and when it is not parallel to the direction, light is preferentially transmitted. Therefore, as shown in FIG. 7, the anisotropic light diffusion layers 110 and 120 have a dependency of light diffusibility on the incident light angle in which the linear transmittance changes depending on the incident light angle to the anisotropic light diffusion layer. Here, a curve showing a dependency of light diffusibility on the incident light angle as shown in FIG. 7 will be hereinafter referred to as an "optical profile". The optical profile does not directly represent the light diffusibility, but can be said to exhibit the light diffusibility on the whole if it is interpreted that the diffuse transmittance increases conversely as a result of a decrease in linear transmittance.

Although an ordinary isotropic light diffusing film exhibits a mountain-shaped optical profile with a peak around 0°, the anisotropic light diffusion layers 110 and 120 exhibit valley-shaped optical profiles in which when the incident light angle in the scattering central axis direction of the columnar structure 113 or the tabular structure 123 is set to 0°, the linear transmittance once reaches a minimum value at an incident light angle of ± 5 to ± 20°, as compared to the linear transmittance in the case of 0° incidence, the linear transmittance increases as (the absolute value of) the incident light angle increases, and the linear transmittance reaches a maximum value at an incident light angle of ± 40° to ± 60°.

Similarly, also in the anisotropic light diffusion layer 120 having a tabular structure, when the direction of light incident at a predetermined incident light angle is substantially parallel to the azimuth direction of a region having a refractive index different from that of the matrix region (height direction of the tabular structure 123), light is preferentially diffused, and when it is not parallel to the direction, light is preferentially transmitted. Therefore, it has a dependency of light diffusibility on the incident light angle and exhibits a valley-shaped optical profile, like the anisotropic light diffusion layer 110.

As described above, the anisotropic light diffusion layers 110 and 120 have a property that incident light is strongly diffused in an incident light angle range of ± 5° to 20° close to the scattering central axis direction, but in an incident light angle range equal to or greater than that, the diffusion is attenuated to increase the linear transmittance.

Hereinafter, an angular range of two incident light angles with respect to a linear transmittance of an intermediate value between the maximum linear transmittance and the minimum linear transmittance will be referred to as a diffusion region (the width of this diffusion region will be referred to as "diffusion width"), whereas other angular range of incident light will be referred to as a non-diffusion region (transmission region). The diffusion region and the non-diffusion region will be described in detail by taking the case of an optical profile shown in FIG. 7 as an example. In this optical profile, the maximum linear transmittance is about 52%, the minimum linear transmittance is about 9%, and the linear transmittance as their intermediate value is about 30%. The incident light angle range between the two incident light angles (including the incident light angle of 0° between the two broken lines on the optical profile shown in FIG. 7) with respect to the linear transmittance of the intermediate value will be a diffusion region, whereas other angular ranges of incident light will be non-diffusion regions (transmission regions).

On the other hand, in the anisotropic light diffusion layer 110 having a columnar structure, as shown in the state of the transmitted light in FIG. 5A, the transmitted light has a substantially circular shape, and exhibits substantially identical light diffusibility in the machine direction (MD) and the transverse direction (TD; the width direction of the layer, perpendicular to MD). In other words, diffusion is isotropic in the anisotropic light diffusion layer 110 having a columnar structure. Further, as shown in FIG. 7, even when the incident light angle is changed, the change in light diffusibility (in particular, the optical profile in the vicinity of the boundary between the non-diffusion region and the diffusion region) is relatively moderate.

On the other hand, in the anisotropic light diffusion layer 120 having a tabular structure, as shown in the state of the transmitted light in FIG. 5B, the transmitted light has a substantially needle-like shape, and the light diffusibility is greatly different between MD and TD. In other words, diffusion is anisotropic in the anisotropic light diffusion layer 120 having a tabular structure. More specifically, in the example shown in FIG. 5B, diffusion is wider in the MD than in the case of the columnar structure, but diffusion is narrower in the TD than in the case of the columnar structure.

FIG. 8 shows a three-dimensional polar coordinate expression for explaining the scattering central axis. In the three-dimensional polar coordinate expression, when the surface of the anisotropic light diffusion layer is regarded as an xy plane while the normal line is regarded as a z axis, the scattering central axis can be expressed by a polar angle

θ and an azimuthal angle φ. That is, it can be said that $P_{xy}$ in FIG. 8 is the length direction of the scattering central axis projected on the surface of the anisotropic light diffusion layer.

In the present invention, a polar angle θ (-90° < θ < 90°) formed by the normal line of the anisotropic light diffusion layer (z axis shown in FIG. 8) and the scattering central axis is defined as a scattering central axis angle.

It should be noted that the positive and negative of the scattering central axis angle will be defined as "+" when the scattering central axis is inclined to one side, and as "-" when the axis is inclined to the other side, with respect to a plane passing through both a predetermined axis of symmetry in the planar direction of the anisotropic light diffusion layer (for example, an axis in the MD direction which passes through the center of gravity of the anisotropic light diffusion layer) and the normal line of the anisotropic light diffusion layer.

The anisotropic light diffusion layer may have a plurality of groups of pillar regions (an assembly of pillar regions having the same inclination) having different inclinations in a single layer. As described above, when there are a plurality of groups of pillar regions having different inclinations in a single layer, there are also a plurality of scattering central axes in response to the inclination for each group of pillar regions.

In the present invention, the terms "scattering" and "diffusion" have the same meaning. Both the terms "photopolymerization" and "photocuring" mean that a photopolymerizable compound undergoes a polymerization reaction by light. The term (meth)acrylate means that it may be either an acrylate or a methacrylate.

[Anti-glare film]

An anti-glare film of the present invention will be described by way of embodiments with reference to the accompanying drawings.

FIG. 1 is a schematic cross-sectional view of an anti-glare film of an embodiment of the present invention.

An anti-glare film 10 of the present embodiment includes an anti-glare layer 1 and an anisotropic light diffusion layer 3. In addition, a translucent substrate 5 and a transparent pressure-sensitive adhesive layer 7 are further provided between the anti-glare layer 1 and the anisotropic light diffusion layer 3.

A first surface 1a of the anti-glare layer 1 is an uneven surface, and the translucent substrate 5, the transparent pressure-sensitive adhesive layer 7 and the anisotropic light diffusion layer 3 are sequentially laminated on a second surface 1b on the opposite side of the first surface 1a side of the anti-glare layer 1. In the anti-glare film 10, typically, an anti-glare layer laminate 9 in which the anti-glare layer 1 is formed on one surface of the translucent substrate 5 and the anisotropic light diffusion layer 3 are laminated through the transparent pressure-sensitive adhesive layer 7.

However, the configuration of the anti-glare film of the present invention is not limited to this configuration.

(Anti-glare layer)

As the anti-glare layer 1, the first surface 1a may be an uneven surface, and can be appropriately selected from known anti-glare layers. Examples of the anti-glare layer 1 include a layer containing a transparent resin.

The total light transmittance (JIS K 7361-1: 1997) of the transparent resin is preferably 80% or more and more preferably 90% or more.

Examples of the transparent resin include thermoplastic resins and cured products of curable resins. Examples of the curable resins include thermosetting resins and photocurable resins.

Examples of the thermoplastic resins include polyethylene terephthalate (PET), polyethylene naphthalate (PEN), polymethyl methacrylate (PMMA), polycarbonate (PC), polyethylene (PE), polypropylene (PP), polyvinyl alcohol (PVA), polyvinyl chloride (PVC), cycloolefin copolymers (COC), norbornene-containing resins and polyether sulfone.

Examples of the thermosetting resins include phenol resins, furan resins, xylene / formaldehyde resins, ketone / formaldehyde resins, urea resins, melamine resins, aniline resins, alkyd resins, unsaturated polyester resins and epoxy resins. These may be used alone, or a plurality thereof may be mixed for use.

Examples of the photocurable resins include any one of monomers, oligomers and prepolymers alone, or a mixture obtained by appropriately mixing two or more of these, which have radically polymerizable functional groups such as an acryloyl group, a methacryloyl group, an acryloyloxy group and a methacryloyloxy group, or cationic polymerizable functional groups such as an epoxy group, a vinyl ether group and an oxetane group. Examples of the monomer include methyl acrylate, methyl methacrylate, methoxy polyethylene methacrylate, cyclohexyl methacrylate, phenoxyethyl methacrylate, ethylene glycol dimethacrylate, didipentaerythritol hexaacrylate, and trimethylolpropane trimethacrylate. Examples of the oligomer and prepolymer include acrylate compounds such as polyester acrylate, polyurethane acrylate, polyfunctional urethane acrylate, epoxy acrylate, polyether acrylate, alkyd acrylate, melamine acrylate and silicone acrylate; epoxy-based compounds such as unsaturated polyester, tetramethylene glycol diglycidyl ether, propylene glycol diglycidyl ether, neopentyl glycol diglycidyl ether, bisphenol A diglycidyl ether and various alicyclic epoxy compounds; and oxetane compounds such as 3-ethyl-3-hydroxymethyl oxetane, 1,4-bis{ [(3-ethyl-3-oxetanyl)methoxy]methyl}benzene and di[1-ethyl(3-oxetanyl)]methyl ether. These can be used alone, or a plurality thereof may be

mixed and used.

When cured by ultraviolet irradiation, the above photocurable resin is blended with a photopolymerization initiator, and is used as a photocurable resin composition containing a photocurable resin and a photopolymerization initiator.

The light used for curing may be any of ultraviolet light, visible light and infrared light. Further, these lights may be polarized light or non-polarized light.

As the photopolymerization initiator, radical polymerization initiators such as acetophenone-based initiators, benzophenone-based initiators, thioxanthone-based initiators, benzoin and benzoin methyl ether; and cationic polymerization initiators such as aromatic diazonium salts, aromatic sulfonium salts, aromatic iodonium salts and metallocene compounds can be used alone or in combination as appropriate.

The photocurable resin composition may further contain a polymer resin as long as polymerization and curing of the photocurable resin are not hindered. The polymer resin is typically a thermoplastic resin, and specific examples thereof include acrylic resins, alkyd resins and polyester resins. These resins preferably have an acidic functional group such as a carboxyl group, a phosphate group or a sulfonate group.

It should be noted that when forming an anti-glare layer using a photocurable resin composition, it is also possible to prepare a coating material containing a photocurable resin composition and an organic solvent. A layer containing a transparent resin is formed by applying the coating material and volatilizing the organic solvent, followed by curing the resultant by light irradiation. As an organic solvent, a solvent suitable for dissolving a photocurable resin composition is selected appropriately. More specifically, in consideration of coating suitability such as wettability to a translucent substrate, viscosity, and drying rate, a single or mixed solvent selected from alcohol-based solvents, ester-based solvents, ketone-based solvents, ether-based solvents and aromatic hydrocarbon solvents can be used.

Particles may be dispersed in the transparent resin. The size of the particle diameter is not limited as long as the first surface 1a of the anti-glare layer 1 can be formed into an uneven surface. Further, by using particles (scattering particles) of a material having a different refractive index from that of the transparent resin, it is possible to impart internal scattering properties to the anti-glare layer 1. It should be noted that the method of forming the first surface 1a of the anti-glare layer 1 into an uneven surface is not limited to the method of using particles, and a known method such as embossing can be employed.

Examples of the particles include cross-linked polymer particles of methyl methacrylate or polystyrene, silica particles, and the like.

An additive may be added to the transparent resin. As an additive, for example, a leveling agent, an ultraviolet ray (UV) absorbing agent, an antistatic agent, a thickener and the like can be mentioned. The leveling agent has a function of equalizing the tension on the surface of a coating film formed of a coating material containing a transparent resin or its precursor (curable resin or the like) and an organic solvent, and correcting defects before forming the anti-glare layer, and a material having lower interfacial tension and surface tension than the transparent resin or its precursor is used. The thickener has a function of imparting thixotropy to the above-mentioned coating material, and has an effect of preventing precipitation of particles and the like to facilitate formation of a fine uneven shape on the surface of the anti-glare layer.

An arithmetic average roughness (Ra) of the first surface 1a (uneven surface) of the anti-glare layer 1 is preferably from 0.05 μm to 1.00 μm, more preferably from 0.10 μm to 0.80 μm, and still more preferably from 0.15 μm to 0. 50 μm. If Ra is equal to or more than the above lower limit value, the anti-glare properties are further improved. When Ra is equal to or less than the above upper limit value, since the haze of the anti-glare film 10 is low, the image sharpness is more favorable.

Ra is measured according to JIS B 0601: 2001 under a condition where a roughness cut-off $\lambda c = 0.8$ mm.

The internal haze (JIS K 7136: 2000) of the anti-glare layer 1 is preferably 20% or less, more preferably 10% or less, and still more preferably 5% or less. The internal haze is a haze caused by internal scattering in the anti-glare layer 1. If the internal haze is equal to or less than the above upper limit value, the image sharpness, black luminance and contrast are further improved.

The internal haze is measured by a haze meter.

The internal haze can be adjusted, for example, by the content ratio of the scattering particles (particles having a refractive index different from that of the matrix (resin constituting the layer) by 0.03 or more) in the anti-glare layer 1, the type of scattering particles, and the like. The smaller the content ratio of the scattering particles, or the smaller the difference between the refractive index of the scattering particles and the refractive index of the matrix, the smaller the internal haze tends to be.

The content of the scattering particle in the anti-glare layer 1 is preferably 30% by mass or less, and may even be 0% by mass, with respect to a resin constituting the layer.

The thickness of the anti-glare layer 1 is preferably from 1 to 25 μm, more preferably from 2 to 10 μm, and still more preferably from 3 to 7 μm.

If the thickness of the anti-glare layer 1 is equal to or more than the above lower limit value, the anti-glare

properties are further improved. Moreover, when the anti-glare layer 1 is a layer formed of a photocurable resin composition, if the thickness of the anti-glare layer 1 is equal to or more than the above lower limit value, curing defects due to oxygen inhibition are less likely to occur at the time of photocuring, and the wear resistance of the anti-glare layer 1 is improved.

If the thickness of the anti-glare layer 1 is equal to or less than the above upper limit value, the image sharpness is further improved. In addition, when the anti-glare layer 1 is a layer formed of a photocurable resin composition, problems due to curing shrinkage (such as the occurrence of curling, occurrence of microcracks, and decrease in adhesion to a translucent substrate) are less likely to occur. Furthermore, it is possible to suppress the cost increase due to the increase of the required amount of coating material accompanying the increase in the film thickness.

(Anisotropic light diffusion layer)

FIG. 2 is a schematic cross-sectional view showing an example of the anisotropic light diffusion layer 3.

The anisotropic light diffusion layer 3 includes a matrix region 31 and a plurality of pillar regions 33 (also referred to as "columnar structures") having different refractive indexes from that of the matrix region 31. Each of the plurality of pillar regions 33 extends from one surface side of the anisotropic light diffusion layer 3 toward the other surface side.

One end of the pillar region 33 reaches one surface of the anisotropic light diffusion layer 3. The other end of the pillar region 33 may or may not reach the other surface of the anisotropic light diffusion layer 3. Each of both ends of the pillar region 33 may not reach the surface of the anisotropic light diffusion layer 3.

In this example, the extension direction of the pillar region 33 is inclined with respect to the thickness direction (normal direction) of the anisotropic light diffusion layer 3. However, the anisotropic light diffusion layer 3 is not limited to this example, and the extension direction of the pillar region 33 and the thickness direction of the anisotropic light diffusion layer 3 may coincide with each other.

The refractive index of the matrix region 31 only needs to be different from the refractive index of the pillar region 33, and the degree of difference in the refractive index is not particularly limited and is relative. When the refractive index of the matrix region 31 is lower than the refractive index of the pillar region 33, the matrix region 31 serves as a low refractive index region. Conversely, when the refractive index of the matrix region 31 is higher than the refractive index of the pillar region 33, the matrix region 31 serves as a high refractive index region. Here, the refractive index at the interface between the matrix region 31 and the pillar region 33 preferably changes incrementally. As a result of incremental changes, the change in diffusibility when the incident light angle is changed becomes extremely steep, and the problem of easy generation of scintillation hardly occurs. By forming the matrix region 31 and the pillar region 33 by the phase separation accompanying light irradiation, the refractive index at the interface between the matrix region 31 and the pillar region 33 can be changed incrementally.

An average height H of the pillar regions 33 in the thickness direction of the anisotropic light diffusion layer 3 is 80% or more, preferably 90% or more, and more preferably 95% or more, of a thickness T of the anisotropic light diffusion layer 3. If the ratio of the average height H with respect to the thickness T is equal to or more than the above lower limit value, the front contrast hardly decreases.

When a plurality of regions having different refractive indices are present intermittently in the thickness direction of the anisotropic light diffusion layer 3 (for example, when particles having different refractive indexes are dispersed in the matrix region, as in the case of Patent Document 2 described above), incident light is likely to be scattered. In a display device that leaks light in an oblique direction at the time of black display, when the leaked incident light is scattered at the time of black display, the luminance at the time of black display is increased and the front contrast is lowered.

If the ratio of the average height H with respect to the thickness T is equal to or more than the above lower limit value, since the interface between the matrix region 31 and the pillar region 33 is present continuously without being interrupted over a certain range or more in the thickness direction of the anisotropic light diffusion layer 3, the light incident from an oblique direction with respect to the scattering central axis of the pillar region is less likely to be scattered.

The upper limit of the average height H with respect to the thickness T is not particularly limited, but is preferably 100%.

The average height H is obtained by measuring the heights of ten pillar regions 33 using an optical microscope and determining the average value thereof. The height of the pillar region 33 refers to a height from the position of the lower end to the position of the upper end of the pillar region 33 when the anisotropic light diffusion layer 3 is placed horizontally with one surface of the anisotropic light diffusion layer 3 on the lower side and the other surface on the upper side.

There is no particular limitation on the cross-sectional shape perpendicular to the extension direction of the pillar region 33. For example, a circular shape, an elliptical shape, a polygonal shape, an indefinite shape, a mixture thereof or the like may be adopted.

When the maximum diameter in the cross-sectional shape perpendicular to the extension direction of the pillar region 33 is defined as a long diameter LA and the maximum diameter in the direction orthogonal to the long diameter

LA direction is defined as a short diameter SA, an aspect ratio expressed by the ratio of the long diameter LA to the short diameter SA (LA / SA) is preferably less than 2, more preferably less than 1.5, and still more preferably less than 1.2. The lower limit of the aspect ratio (LA / SA) is 1. In other words, the long diameter LA and the short diameter SA may be the same value.

When the aspect ratio (LA / SA) is less than 2, the effect of suppressing the reduction in front contrast is further improved.

The long diameter LA (maximum value among each of long diameters LA in the plurality of pillar regions 33) is preferably 0.5 μm or more, more preferably 1.0 μm or more, and still more preferably 1.5 μm or more. By setting the long diameter LA to the above value or more, the diffusion range tends to be broadened.

The long diameter LA is preferably 8.0 μm or less, more preferably 3.0 μm or less, and still more preferably 2.5 μm or less. By setting the long diameter LA to the above value or less, the diffusion range tends to be broadened, the change in diffusibility when the incident light angle is changed tends to be gradual, and the occurrence of scintillation or light interference (rainbow) can be further prevented.

These lower limit value and upper limit value of the long diameter LA can be combined as appropriate. For example, by setting the long diameter LA in the pillar region 33 to 0.5 μm to 8.0 μm, the diffusion range can be broadened, the change in diffusibility when the incident light angle is changed becomes more moderate, and the occurrence of scintillation tends to be more suppressed.

The short diameter SA (maximum value among the short diameters SA in the plurality of pillar regions 33) is preferably 0.5 μm or more, more preferably 1.0 μm or more, and still more preferably 1.5 μm or more. When the short diameter SA is equal to or more than the above value, the light diffusibility and light collection properties tend to be more excellent.

The short diameter SA is preferably 5.0 μm or less, more preferably 3.0 μm or less, and still more preferably 2.5 μm or less. When the short diameter SA is equal to or less than the above value, the diffusion range tends to be further broadened.

These lower limit value and upper limit value of the short diameter SA can be combined as appropriate. For example, by setting the short diameter SA in the pillar region 33 to 0.5 μm to 5.0 μm, the diffusion range tends to be broadened, and the light diffusibility and light collection properties tend to be more excellent.

The cross-sectional shape perpendicular to the extension direction of the pillar region 33 can be confirmed by observing the surface of the anisotropic light diffusion layer 3 with an optical microscope.

Each of the maximum value of the long diameter LA and the maximum value of the short diameter SA may be obtained by observing the surface of the anisotropic light diffusion layer 3 with an optical microscope, and measuring the long diameters LA and short diameters SA of the cross-sectional shapes of ten arbitrarily selected pillar regions 33 to determine the respective maximum values.

As the aspect ratio (LA / SA), a value obtained by dividing the maximum value of the long diameter LA obtained above by the maximum value of the short diameter SA is used.

The anisotropic light diffusion layer 3 has a scattering central axis.

In the anisotropic light diffusion layer 3, each of the plurality of pillar regions 33 is formed so that the extension direction and the scattering central axis are parallel to each other. Therefore, the plurality of pillar regions 33 in the same anisotropic light diffusion layer 3 are parallel to each other.

In order for the extension direction of the pillar region 33 to be parallel to the scattering central axis, only the law of refractive index (Snell's law) has to be satisfied, and there is no need to be strictly parallel. According to Snell's law, when light is incident on the interface of a medium having a refractive index $n_2$ from a medium having a refractive index $n_1$, a relationship of $n_1 \sin \theta_1 = n_2 \sin \theta_2$ is established between an incident light angle $\theta_1$ and a refraction angle $\theta_2$. For example, assuming that $n_1 = 1$ (air) and $n_2 = 1.51$ (anisotropic light diffusion layer), the extension direction (refraction angle) of the pillar region 33 is approximately 19° when the inclination (incident light angle) of the scattering central axis is 30°, but even if the incident light angle is different from the refraction angle as described above, this example is included in the concept of parallelism in the present embodiment as long as Snell's law is satisfied.

Light incident in the anisotropic light diffusion layer 3 at a predetermined incident light angle is preferentially diffused when the incident light angle is substantially parallel to the extension direction (azimuth direction) of the pillar region 33, and is preferentially transmitted when the incident light angle is not substantially parallel to the extension direction. Therefore, when the angle of light incident on the anisotropic light diffusion layer 3 changes, the linear transmittance also changes. More specifically, in the anisotropic light diffusion layer 3, incident light is strongly diffused in an incident light angle range (diffusion region) close to the direction inclined by a predetermined angle from the normal direction (that is, the extension direction of the pillar region 33), but in an incident light angle range not less than that (non-diffusion region), the diffusion is attenuated to increase the linear transmittance.

The scattering central axis angle of the anisotropic light diffusion layer 3 is preferably from -45° to + 45°, more preferably from -40° to + 40°, and still more preferably from -35° to + 35°. The scattering central axis angle is a polar angle θ formed between the normal line of the anisotropic light diffusion layer 3 and the scattering central axis. If the

scattering central axis angle is within the above range, the black luminance and contrast are further improved.

The positive and negative of the scattering central axis angle will be defined as "+" when the scattering central axis is inclined to one side, and as "-" when the axis is inclined to the other side, with respect to a plane passing through both a predetermined axis of symmetry in the planar direction of the anisotropic light diffusion layer 3 (for example, an axis in the MD (Machine Direction) which passes through the center of gravity of the anisotropic light diffusion layer 3) and the normal direction of the anisotropic light diffusion layer 3.

The scattering central axis angle, that is, the polar angle $\theta$ is measured by a gonio-photometer.

The scattering central axis angle can be adjusted to a desired angle by changing the direction of a ray irradiated to a composition containing a sheet-like photopolymerizable compound when producing the anisotropic light diffusion layer 3.

In the anisotropic light diffusion layer 3, an average value of normal direction transmission ratios in azimuths when light is made incident on the anisotropic light diffusion layer 3 at an angle inclined by 75° from the normal direction of the anisotropic light diffusion layer 3 is preferably 0.02% or less, more preferably 0.01% or less, and still more preferably 0.005% or less.

In a display device that leaks light in an oblique direction at the time of black display, when the direction of the leaked incident light is changed to the front direction in the anisotropic light diffusion layer 3 at the time of black display, the luminance at the time of black display is increased and the front contrast decreases.

As the average value of the normal direction transmission ratio in azimuths decreases, the direction of the leaked incident light is less likely to be changed to the front direction, and the front contrast is less likely to decrease.

The normal direction transmission ratio is determined by the following equation (1).

$$\text{Normal direction transmission ratio} = (\text{transmitted light quantity in the normal direction of the anisotropic light diffusion layer 3 (cd)}) / (\text{transmitted light quantity in a linear direction of incident light (cd)}) \times 100 \qquad (1)$$

The transmitted light quantity in each of the normal direction of the anisotropic light diffusion layer 3 and the linear direction of the incident light is measured using a gonio-photometer. Details are as described in the examples to be described later.

The normal direction transmission ratio can be adjusted by the aspect ratio (LA / SA) in the cross-sectional shape perpendicular to the extension direction of the pillar region 33, the difference between the refractive index of the pillar region 33 and the refractive index of the matrix region 31, the thickness (T) of the anisotropic light diffusion layer and the like. For example, the smaller the aspect ratio (LA / SA), the lower the normal direction transmission ratio tends to be.

The anisotropic light diffusion layer 3 preferably has a maximum linear transmittance of 20% or more and less than 60%, and more preferably 30% or more and 50% or less.

Further, the anisotropic light diffusion layer 3 preferably has a minimum linear transmittance of 20% or less, and more preferably 10% or less. It should be noted that: (maximum linear transmittance) > (minimum linear transmittance). The lowered minimum linear transmittance indicates that the linear transmitted light quantity is decreased (the haze value is increased). Therefore, it is indicated that the diffused light quantity increases as the minimum linear transmittance decreases. The lower the minimum linear transmittance of the anisotropic light diffusion layer 3, the better. Although the lower limit value is not limited, for example, it is 0%.

By setting the maximum linear transmittance and the minimum linear transmittance of the anisotropic light diffusion layer 3 in the above ranges, the scintillation prevention performance and the black luminance / contrast are further improved.

The anisotropic light diffusion layer 3 is typically composed of a cured product of a composition containing a photopolymerizable compound. When curing a layer of this composition, a region having a different refractive index is formed. The composition containing the photopolymerizable compound will be described in detail later.

The thickness T of the anisotropic light diffusion layer 3 is preferably from 10 to 200 $\mu$m, more preferably from 20 to 100 $\mu$m, and still more preferably from 30 to 80 $\mu$m. If the thickness T is equal to or more than the above lower limit value, the scintillation prevention performance is further improved. When the thickness T is equal to or less than the above upper limit value, the image sharpness is further improved. The thickness T is measured by the method described in the examples to be described later.

(Translucent substrate)

The translucent substrate 5 functions as a support of the anti-glare layer 1.

The higher the transparency of the translucent substrate 5, the better.

The total light transmittance (JIS K 7361-1: 1997) of the translucent substrate 5 is preferably 80% or more, more preferably 85% or more, and still more preferably 90% or more. The total light transmittance of the translucent substrate 5 is, for example, 100% or less.

The haze (JIS K 7136: 2000) of the translucent substrate 5 is preferably 3.0 or less, more preferably 1.0 or less, and still more preferably 0.5 or less. The haze of the translucent substrate 5 is, for example, 0 or more.

The translucent substrate 5 is not particularly limited as long as it is translucent, and examples thereof include: glass such as quartz glass and soda glass; and resin films of polyethylene terephthalate (PET), triacetyl cellulose (TAC), polyethylene naphthalate (PEN), polymethyl methacrylate (PMMA), polycarbonate (PC), polyimide (PI), polyethylene (PE), polypropylene (PP), polyvinyl alcohol (PVA), polyvinyl chloride (PVC), cycloolefin copolymers (COC), norbornene-containing resins, polyether sulfone (PES), cellophane, and aromatic polyamide. It should be noted that when the anti-glare film 10 is used in PDP or LCD, PET and TAC films are preferable.

The translucent substrate 5 may be a polarizing plate. Example of the polarizing plate include one in which a polarizer (for example, a PVA film) is sandwiched and held between a pair of protective layers (for example, TAC films).

Although the thickness of the translucent substrate 5 is preferably thin from the viewpoint of weight reduction, in consideration of its productivity and handling properties, the thickness is preferably from 1 μm to 5 mm, more preferably from 10 to 500 μm, and still more preferably from 25 to 150 μm.

In order to improve adhesion with the anti-glare layer 1 or the transparent pressure-sensitive adhesive layer 7, the surface of the translucent substrate 5 may be subjected to a surface treatment such as an alkali treatment, a plasma treatment, a corona treatment, a sputtering treatment or a saponification treatment, application of a surfactant, a silane coupling agent or the like, or a surface modification treatment such as Si deposition.

(Transparent pressure-sensitive adhesive layer)

The total light transmittance (JIS K 7361-1: 1997) of the transparent pressure-sensitive adhesive layer 7 is preferably 60% or more, more preferably 80% or more, and still more preferably 90% or more. The total light transmittance of the transparent pressure-sensitive adhesive layer 7 is, for example, 100% or less.

The transparent pressure-sensitive adhesive layer 7 is not particularly limited, and a layer of a transparent pressure-sensitive adhesive known as an optically clear adhesive (OCA) or the like can be used.

The transparent pressure-sensitive adhesive layer 7 generally contains a base resin, and further contains an optional component, if required. Examples of the base resin of the transparent pressure-sensitive adhesive layer 7 include polyester resins, epoxy resins, polyurethane resins, silicone resins, and acrylic resins. Acrylic resins are preferred because of their high optical transparency, relatively low cost, and the like.

The thickness of the transparent pressure-sensitive adhesive layer 7 may be, for example, about 5 to 50 μm.

(Actions and effects)

In the anti-glare film 10, since the anti-glare layer 1 and the anisotropic light diffusion layer 3 are provided, the anisotropic light diffusion layer 3 includes the matrix region 31 and a plurality of pillar regions 33 having a refractive index different from that of the matrix region 31, the pillar regions 33 extends from one surface side toward the other surface side of the anisotropic light diffusion layer 3, and the average height H of the pillar regions 33 in the thickness direction of the anisotropic light diffusion layer 3 is 80% or more of the thickness T of the anisotropic light diffusion layer 3, it is possible to suppress the occurrence of scintillation and the decrease in front contrast on the display surface of the display device.

In addition, in the technique of Patent Document 2 described above, the anisotropic shape of the dispersed material is a spheroid shape, and the ratio of the long axis to the short axis is within the range of 2 to 20. In this case, since the contour shape of the dispersed material varies depending on the position to be observed (which is referred to as the effective diameter being different), it exhibits a certain degree of scattering properties against incident light from oblique directions even if the incident light is weak, and the direction of some rays of incident light is changed to the front direction.

In Patent Document 2, since the anti-glare film has an isotropic property with respect to the azimuth of incident light, when it was applied to a display device of a type in which the light leakage quantity at the time of black display varies depending on the observation azimuth, the direction of light incident on the internal scattering layer from the azimuth where the light leakage quantity is large is changed to the front direction, so that the black luminance increases and the front contrast decreases.

For supplementing the details of the technique of Patent Document 3, in the display device, the light leakage azimuth is such that due to a crossed Nicols relationship adapted for the polarizing plates, when the absorption axis direction of one of the polarizing plates is defined as 0°, a relationship is established in which the azimuths of 0°, 90°, 180° and 270° are usually small light leakage azimuths, while the azimuths of 45°, 135°, 225° and 315° are large light leakage azimuths.

In patent document 3, a "Lumisty" film manufactured by Sumitomo Chemical Co., Ltd. is used as a scattering control film. The Lumisty film includes a matrix region and a plurality of plate-like regions having a refractive index different from that of the matrix region, and the plurality of plate-like regions are arranged with their longitudinal directions directed in the same direction. In other words, it is the same as the above-mentioned anisotropic light diffusion layer 120 (FIG. 5B), and the light diffusibility is greatly different between MD and TD. Therefore, when two layers of the Lumisty films are stacked as scattering control films so that the long side directions of the plate-like region of each layer intersect with each other (90°) as in Patent Document 3, the scattering control films having a two-layer structure exhibit anisotropy with respect to azimuths in which the scattering properties are very strong in 0°, 90°, 180° and 270° azimuths, while the scattering properties are weak in 45°, 135°, 225° and 315° azimuths.

In the technique of Patent Document 3, when this scattering control film having a two-layer structure is incorporated into a display device, an azimuth in which the scattering properties of the scattering control film having a two-layer structure are low is superimposed with respect to the large light leakage azimuth.

However, in this case, as described above, since a large quantity of light leaks from the azimuths of 45°, 135°, 225° and 315°, and the extent of light leakage in the display device changes at 45° intervals, it is considered that the direction of a large portion of leaked incident light is changed to the front direction at the time of black display even with the technique of Patent Document 3, causing a decrease in front contrast due to the increase in black luminance.

In the anti-glare film 10 of the present embodiment, the problem due to the effective diameter in Patent Document 2 is reduced by using one having the pillar region 33 extending almost all over the thickness direction of the anisotropic light diffusion layer 3 from one surface side toward the other surface side of the anisotropic light diffusion layer 3, as the anisotropic light diffusion layer 3 provided on the side opposite to the first surface 1a (uneven surface) of the anti-glare layer 1. Therefore, at the time of black display, it is possible to suppress the ratio at which the direction of light incident on the anisotropic light diffusion layer 3 from the large light leakage azimuth is changed to the front direction.

Further, the anisotropic light diffusion layer 3 including the pillar region 33 has an isotropic property with respect to the azimuth of incident light in a planar direction orthogonal to the height direction of the pillar region 33 (the thickness direction of the anisotropic light diffusion layer 3). For this reason, since the scattering properties with respect to the light leakage due to the azimuth are also equally low, even if a multi-layer structure considering the large light leakage azimuth and the small light leakage azimuth at the time of black display as described in Patent Document 3 is not produced, it is possible to suppress the decrease in front contrast due to the increase in black luminance.

From these facts, it is considered that the anti-glare film 10 has excellent effects, in a display device, of preventing the occurrence of scintillation, suppressing the decrease in front contrast, suppressing the decrease in front contrast due to the increase in black luminance at the time of black display, and improving the visibility.

[Method for producing anti-glare film]

The method for producing the anti-glare film 10 is not particularly limited, and examples thereof include a production method having the following steps (i) to (ii).

(i) A step of producing the anisotropic light diffusion layer 3.
(ii) A step of pasting together a surface on the translucent substrate 5 side of the anti-glare layer laminate 9 in which the anti-glare layer 1 is formed on one surface of the translucent substrate 5, and the anisotropic light diffusion layer 3 via the transparent pressure-sensitive adhesive layer 7.

(Step (i))

The anisotropic light diffusion layer 3 can be obtained by appropriately adjusting the heating temperature of a photocurable composition, the layer thickness of the photocurable composition, the oxygen inhibition due to a mask or a nitrogen atmosphere, the direction of a ray irradiated to the photocurable composition, and the like, by referring to the methods disclosed in, for example, Japanese Unexamined Patent Application, First Publication No. 2005-265915 and Japanese Unexamined Patent Application, First Publication No. 2015-191178. The production method of the present invention mainly includes the following steps.

(i-1) A step of providing a layer of a composition containing a photopolymerizable compound (hereinafter, may be referred to as "photocurable composition") on a substrate.

(i-2) A step of obtaining parallel rays from a light source and making the parallel rays incident onto the layer of the photocurable composition to cure the layer of the photocurable composition.

<Photocurable composition>

The photocurable composition is a material that can be polymerized and cured by irradiation of light, and typically contains a photopolymerizable compound and a photoinitiator. Examples of light include ultraviolet (UV) light and visible light.

As a photocurable composition, for example, the following compositions can be used.

(1) Those containing a single photopolymerizable compound and a photoinitiator.
(2) Those containing a plurality of photopolymerizable compounds and a photoinitiator.
(3) Those containing one or more photopolymerizable compounds, a polymer compound with no photopolymerizability, and a photoinitiator.

In any of the above compositions, fine structures on the order of microns and having different refractive indices are formed in the anisotropic light diffusion layer 3 by light irradiation.

Even when one type of photopolymerizable compound is used to form the anisotropic light diffusion layer 3, a difference in refractive index occurs due to the production of difference in density. This is because, since the curing rate is high in a portion where the irradiation illuminance of light is strong, the polymerized / cured material moves to the vicinity of the cured region, and, as a result, a region where the refractive index is high and a region where the refractive index is low are formed.

Therefore, in the composition of the above (1), it is preferable to use a photopolymerizable compound having a large change in refractive index before and after photopolymerization. In the above compositions (2) and (3), it is preferable to combine a plurality of materials having different refractive indices. It should be noted that the change in refractive index or the difference in refractive index herein indicates a change or difference of, more specifically, 0.01 or more, preferably 0.05 or more, and more preferably 0.10 or more.

<Photopolymerizable compound>

Examples of the photopolymerizable compound include compounds having a radically polymerizable or cationically polymerizable functional group (macromonomers, polymers, oligomers, monomers and the like).

Examples of the radically polymerizable functional group include functional groups having an unsaturated double bond such as an acryloyl group, a methacryloyl group and an allyl group. Examples of the cationically polymerizable functional group include an epoxy group, a vinyl ether group and an oxetane group.

Examples of the compound having a radically polymerizable functional group (radically polymerizable compound) include compounds containing one or more unsaturated double bonds in a molecule thereof. Specific examples thereof include acrylic oligomers called by the names of epoxy acrylate, urethane acrylate, polyester acrylate, polyether acrylate, polybutadiene acrylate, silicone acrylate and the like; and acrylate monomers such as 2-ethylhexyl acrylate, isoamyl acrylate, butoxyethyl acrylate, ethoxydiethylene glycol acrylate, phenoxyethyl acrylate, tetrahydrofurfuryl acrylate, isonorbornyl acrylate, 2-hydroxyethyl acrylate, 2-hydroxypropyl acrylate, 2-acryloyloxyphthalic acid, dicyclopentenyl acrylate, triethylene glycol diacrylate, neopentyl glycol diacrylate, 1,6-hexanediol diacrylate, EO adduct diacrylate of bisphenol A, trimethylolpropane triacrylate, EO modified trimethylolpropane triacrylate, pentaerythritol triacrylate, pentaerythritol tetraacrylate, ditrimethylolpropane tetraacrylate and dipentaerythritol hexaacrylate. These compounds may be each used alone, or two or more of these compounds may be used in a mixture. Although methacrylates may also be used in a similar manner, in general, acrylates are preferred over methacrylates because of their higher photopolymerization rates.

Examples of the compound having a cationically polymerizable functional group (cationically polymerizable compound) include compounds having at least one epoxy group, vinyl ether group or oxetane group in a molecule thereof. As a compound having an epoxy group, for example, the following compounds can be mentioned, although the examples are not limited to these:

2-ethylhexyl diglycol glycidyl ether, glycidyl ether of biphenyl, diglycidyl ethers of bisphenols such as bisphenol A, hydrogenated bisphenol A, bisphenol F, bisphenol AD, bisphenol S, tetramethyl bisphenol A, tetramethyl bisphenol F, tetrachlorobisphenol A and tetrabromobisphenol A, polyglycidyl ethers of novolac resins such as phenol novolac, cresol novolac, brominated phenol novolac and ortho-cresol novolac, diglycidyl ethers of alkylene glycols such as ethylene glycol, polyethylene glycol, polypropylene glycol, butanediol, 1,6-hexanediol, neopentyl glycol, trimethylolpropane, 1,4-cyclohexene dimethanol, EO adducts of bisphenol A and PO adducts of bisphenol A, and glycidyl

esters such as a glycidyl ester of hexahydrophthalic acid and a diglycidyl ester of dimer acid; and

alicyclic epoxy compounds such as 3,4-epoxycyclohexylmethyl-3',4'-epoxycyclohexanecarboxylate, 2-(3,4-epoxycyclohexyl-5,5-spiro-3,4-epoxy)cyclohexane-meta-dioxane, di(3,4-epoxycyclohexylmethyl) adipate, di(3,4-epoxy-6-methylcyclohexylmethyl) adipate, 3,4-epoxy-6-methylcyclohexyl-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis (3,4-epoxycyclohexanecarboxylate), lactone-modified 3,4-epoxycyclohexylmethyl-3',4'-epoxycyclohexanecarboxylate, tetra(3,4-epoxycyclohexylmethyl) butanetetracarboxylate and di(3,4-epoxycyclohexylmethyl)-4,5-epoxytetrahydrophthalate.

Examples of the compound having a vinyl ether group include, but not limited to, diethylene glycol divinyl ether, triethylene glycol divinyl ether, butanediol divinyl ether, hexanediol divinyl ether, cyclohexane dimethanol divinyl ether, hydroxybutyl vinyl ether, ethyl vinyl ether, dodecyl vinyl ether, trimethylolpropane trivinyl ether and propenyl ether propylene carbonate. It should be noted that although vinyl ether compounds are generally cationically polymerizable, radical polymerization is also possible by combining the vinyl ether compounds with acrylates.

Examples of the compound having an oxetane group include 1,4-bis[(3-ethyl-3-oxetanylmethoxy)methyl] benzene and 3-ethyl-3-(hydroxymethyl)-oxetane.

The above cationically polymerizable compounds may be each used alone, or two or more of these compounds may be used in a mixture.

The photopolymerizable compound is not limited to the above. Further, in order to lower the refractive index of the above photopolymerizable compound to produce a sufficient difference in refractive index, a fluorine atom (F) may be introduced into the above photopolymerizable compound. A sulfur atom (S), a bromine atom (Br) or various metal atoms may be introduced into the above photopolymerizable compound in order to increase the refractive index of the above photopolymerizable compound to produce a sufficient difference in refractive index. Furthermore, as disclosed in Published Japanese Translation No. 2005-514487 of the PCT International Publication, it is also effective to add, to the photopolymerizable compound described above, functional ultrafine particles obtained by introducing a photopolymerizable functional group such as an acryl group, a methacryl group or an epoxy group onto the surfaces of ultrafine particles composed of a metal oxide of high refractive index such as titanium oxide ($TiO_2$), zirconium oxide ($ZrO_2$) and tin oxide ($SnO_x$).

The photopolymerizable compound may include a photopolymerizable compound having a silicone skeleton. The photopolymerizable compound having a silicone skeleton is oriented along with its structure (mainly ether linkages) and polymerized/cured, and forms a low refractive index region, a high refractive index region, or a low refractive index region and a high refractive index region. By using a photopolymerizable compound having a silicone skeleton, the pillar region 33 can be easily tilted. It should be noted that one of the matrix region 31 and the pillar region 33 corresponds to the low refractive index region, and the other corresponds to the high refractive index region.

In the low refractive index region, it is preferable that the amount of a silicone resin which is a cured product of the photopolymerizable compound having a silicone skeleton be relatively large. As a result, it is possible to further facilitate inclination of the scattering central axis. Since a silicone resin contains a large amount of silicon (Si) as compared to a compound having no silicone skeleton, with this silicon as an index, the relative amount of the silicone resin can be confirmed by using an energy dispersive X-ray spectrometer (EDS).

The photopolymerizable compound having a silicone skeleton may be any of a monomer, an oligomer, a prepolymer, and a macromonomer. Although the type and number of radically polymerizable or cationically polymerizable functional groups are not particularly limited, it is preferable to have a polyfunctional acryloyl group or methacryloyl group, because the crosslinking density increases as the number of functional groups increases to easily produce a difference in refractive index, which is favorable. In addition, the compound having a silicone skeleton may be insufficient in terms of compatibility with other compounds due to the structure thereof, but in such a case, it can be converted into a urethane to enhance the compatibility. As such a compound, silicone urethane (meth)acrylate which has an acryloyl group or a methacryloyl group at the terminal can be mentioned.

Examples of the silicone skeleton include those shown by the following general formula (1).

In the general formula (1), $R_1$, $R_2$, $R_3$, $R_4$, $R_5$ and $R_6$ each independently have a functional group such as a methyl group, an alkyl group, a fluoroalkyl group, a phenyl group, an epoxy group, an amino group, a carboxyl group, a polyether group, an acryloyl group and a methacryloyl group. In the general formula (1), n is preferably an integer of 1 to 500.

[Chemical Formula 1]

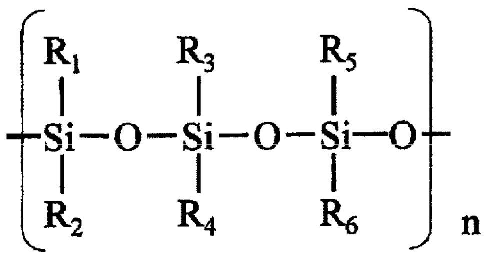

(1)

The weight average molecular weight (Mw) of the photopolymerizable compound having a silicone skeleton is preferably in the range of 500 to 50,000, and more preferably in the range of 2,000 to 20,000. When the weight average molecular weight is in the above range, a sufficient photocuring reaction occurs, and the silicone resin present in the anisotropic light diffusion layer 3 is easily oriented. With the azimuth of the silicone resin, the scattering central axis can be easily tilted.

A photopolymerizable compound having a silicone skeleton and a compound having no silicone skeleton may be used in combination. As a result, the low refractive index region and the high refractive index region are easily formed separately, and the degree of anisotropy becomes strong.

As the compound having no silicone skeleton, in addition to the photopolymerizable compound, a thermoplastic resin and a thermosetting resin can be used, and these can also be used in combination.

As the photopolymerizable compound, polymers, oligomers and monomers having a radically polymerizable or cationically polymerizable functional group (but having no silicone skeleton) can be used.

Examples of the thermoplastic resin include polyesters, polyethers, polyurethanes, polyamides, polystyrenes, polycarbonates, polyacetals, polyvinyl acetate, acrylic resins, and copolymers and modified products thereof. In the case of using a thermoplastic resin, it is dissolved using a solvent that dissolves the thermoplastic resin, and after its application and drying, the photopolymerizable compound having a silicone skeleton is cured by ultraviolet rays to form an anisotropic light diffusion layer.

Examples of the thermosetting resin include epoxy resins, phenol resins, melamine resins, urea resins, unsaturated polyesters, and copolymers and modified products thereof. In the case of using a thermosetting resin, the photopolymerizable compound having a silicone skeleton is cured by ultraviolet rays and then appropriately heated, thereby curing the thermosetting resin to form an anisotropic light diffusion layer.

The photopolymerizable compound is most preferable as a compound having no silicone skeleton, which is excellent in productivity because, for example, the low refractive index region and the high refractive index region are easily separated, a solvent is not necessary when using a thermoplastic resin, and thus a drying process is not required, a thermosetting process is not required for, for example, a thermosetting resin, and the like.

When the photocurable composition contains a photopolymerizable compound having a silicone skeleton and a compound having no silicone skeleton, the ratio of these compounds in terms of mass ratio is preferably in the range of 15:85 to 85:15, and more preferably in the range of 30:70 to 70:30. By setting the ratio within this range, phase separation between the low refractive index region and the high refractive index region is facilitated, and the pillar region is easily tilted.

<Photoinitiator>

Examples of photoinitiators to be used to polymerize radically polymerizable compounds include benzophenone, benzyl, Michler's ketone, 2-chlorothioxanthone, 2,4-diethylthioxanthone, benzoin ethyl ether, benzoin isopropyl ether, benzoin isobutyl ether, 2,2-diethoxyacetophenone, benzyl dimethyl ketal, 2,2-dimethoxy-1,2-diphenylethan-1-one, 2-hydroxy-2-methyl-1-phenylpropan-1-one, 1-hydroxycyclohexyl phenyl ketone, 2-methyl-1-[4-(methylthio)phenyl]-2-morpholinopropanone-1,1-[4-(2-hydroxyethoxy)-phenyl]-2-hydroxy-2-methyl-1-propan-1-one, di-η(5)-cyclopentadienyl-bis[2,6-difluoro-3-(pyrrol-1-yl)phenyl] titanium (IV), and 2-benzyl-2-dimethylamino-1-(4-morpholinophenyl)-butanone-1,2,4,6-trimethyl benzoyl diphenyl phosphine oxide. Further, these compounds may be each used alone, or two or more of these compounds may be used in a mixture.

A photoinitiator to be used to polymerize a cationically polymerizable compound is a compound capable of generating an acid by light irradiation and polymerizing the above-mentioned cationically polymerizable compound by the generated acid, and in general, an onium salt or a metallocene complex is suitably used. As the onium salt, a diazonium salt, a sulfonium salt, an iodonium salt, a phosphonium salt, a selenium salt or the like is used, and as the counter ion thereof, an anion such as $BF_4^-$, $PF_6^-$, $AsF_6^-$ and $SbF_6^-$ is used. Specific examples thereof include, but not

limited to, 4-chlorobenzenediazonium hexafluorophosphate, triphenylsulfonium hexafluoroantimonate, triphenylsulfonium hexafluorophosphate, (4-phenylthiophenyl)diphenylsulfonium hexafluoroantimonate, (4-phenylthiophenyl)diphenylsulfonium hexafluorophosphate, bis[4-(diphenylsulfonio)phenyl] sulfide-bis-hexafluoroantimonate, bis[4-(diphenylsulfonio)phenyl] sulfide-bis-hexafluorophosphate, (4-methoxyphenyl)diphenylsulfonium hexafluoroantimonate, (4-methoxyphenyl)phenyliodonium hexafluoroantimonate, bis(4-t-butylphenyl)iodonium hexafluorophosphate, benzyltriphenylphosphonium hexafluoroantimonate, triphenylselenium hexafluorophosphate and (η5-isopropylbenzene) (η5-cyclopentadienyl) iron (II) hexafluorophosphate. Further, these compounds may be each used alone, or two or more of these compounds may be used in a mixture.

The content of the photoinitiator in the photocurable composition is preferably from 0.01 to 10 parts by mass, more preferably from 0.1 to 7 parts by mass, and still more preferably from 0.1 to 5 parts by mass, with respect to 100 parts by mass of the photopolymerizable compound. If it is 0.01 parts by mass or more, photocurability is favorable. If it is 10 parts by mass or less, a pillar structure is favorably formed. Further, the decrease in internal curability due to hardening of the surface alone, and coloring can be suppressed.

As a polymer compound having no photopolymerizability, acrylic resins, styrene resins, styrene-acrylic copolymers, polyurethane resins, polyester resins, epoxy resins, cellulose-based resins, vinyl acetate-based resins, vinyl chloride-vinyl acetate copolymers, polyvinyl butyral resins, and the like can be mentioned. Although these polymer compounds and photopolymerizable compounds need to have sufficient compatibility before photocuring, it is also possible to use various types of organic solvents, plasticizers, or the like in order to ensure the compatibility. It should be noted that when using an acrylate as a photopolymerizable compound, as a polymer compound having no photopolymerizability, an acrylic resin is preferable from the viewpoint of compatibility.

The photoinitiator is usually used by directly dissolving the powder in the photopolymerizable compound, but if the solubility is poor, the photoinitiator can also be used by being dissolved in advance in an extremely small amount of solvent in high concentrations.

Examples of the solvent include ethyl acetate, butyl acetate, acetone, methyl ethyl ketone, methyl isobutyl ketone, cyclohexanone, toluene and xylene.

It is also possible to add various types of known dyes or sensitizers in order to improve the photopolymerizability.

A thermal curing initiator capable of curing the photopolymerizable compound by heating may also be used in combination with the photoinitiator. In this case, it can be expected to further accelerate and complete the polymerization and curing of the photopolymerizable compound by heating after photocuring.

<Step (i-1)>

In the step (i-1), a layer of the photocurable composition is provided on a substrate.

The substrate is not particularly limited, and examples thereof include those similar to the translucent substrate 5.

As a method of providing the layer of the photocurable composition on the substrate, a normal coating method or printing method is applied. More specifically, coating methods such as air doctor coating, bar coating, blade coating, knife coating, reverse coating, transfer roll coating, gravure roll coating, kiss coating, cast coating, spray coating, slot orifice coating, calendar coating, dam coating, dip coating and die coating, and printing methods including intaglio printing such as gravure printing, and stencil printing such as screen printing, or the like can be used. When the photocurable composition has a low viscosity, it is also possible to provide a weir of a certain height around the substrate and cast the photocurable composition in a space enclosed by the weir. The thickness of the layer of the photocurable composition may be adjusted by adjusting the height of the weir.

After providing the layer of the photocurable composition, in order to prevent oxygen inhibition of the photocurable composition and efficiently form the pillar regions 33, a mask that locally changes the irradiation illuminance of light may be stacked onto the light-irradiated side of the layer of the photocurable composition. The material of the mask is preferably one in which a light absorbing filler such as carbon is dispersed in a matrix, which is configured such that a portion of incident light is absorbed by carbon, but light can be sufficiently transmitted through the opening. As such a matrix, a transparent plastic such as PET, TAC, polyvinyl acetate (PVAc), PVA, acrylic resins or polyethylene, an inorganic substance such as glass or quartz, or a sheet containing these matrices which includes patterning configured to control the quantity of ultraviolet light transmission or a pigment that absorbs ultraviolet light may be used. When such a mask is not used, it is also possible to prevent oxygen inhibition of the photocurable composition by irradiating light in a nitrogen atmosphere. In addition, it is effective simply to stack a normal transparent film on the layer of the photocurable composition to prevent oxygen inhibition and promote the formation of the pillar region 33.

<Step (i-2)>

In step (i-2), first, parallel rays are obtained from a light source. Subsequently, the parallel rays are made incident on the layer of the photocurable composition to cure the layer of the photocurable composition.

As a light source, a short arc, ultraviolet light-generating light source is usually used, and more specifically, it is possible to use a high pressure mercury lamp, a low pressure mercury lamp, a metal halide lamp, a xenon lamp, or the like.

When a layer of the photocurable composition is irradiated with rays of light parallel to a desired scattering central axis to cure the photocurable composition, a plurality of cured regions having a pillar shape (pillar regions) extending along the irradiation direction of parallel rays are formed in the layer of the photocurable composition.

As a method of obtaining such parallel rays, a method of arranging a point light source and arranging an optical lens such as a Fresnel lens for irradiating the parallel rays between the point light source and the layer of the photocurable composition; a method of arranging a linear light source, interposing a set of tubular products between the linear light source and the layer of the photocurable composition, and irradiating light through the tubular products (see Japanese Unexamined Patent Application, First Publication No. 2005-292219); and the like can be mentioned. It is preferable to use a linear light source because continuous production can be carried out.

As a linear light source, a chemical lamp (fluorescent lamp configured to emit ultraviolet rays) may be used. Chemical lamps having a diameter of 20 to 50 mm and a light emission length of about 100 to 1,500 mm are commercially available, and can be appropriately selected in accordance with the size of the anisotropic light diffusion layer 3 to be produced.

The ray irradiated to the layer of the photocurable composition needs to contain a wavelength capable of curing the photopolymerizable compound, and light of a wavelength centered at 365 nm of a mercury lamp is usually used. In the case of producing the anisotropic light diffusion layer 3 using this wavelength range, the illuminance is preferably in the range of 0.01 to 100 $mW/cm^2$, and more preferably in the range of 0.1 to 20 $mW/cm^2$. The light irradiation time is not particularly limited, but is preferably from 10 to 180 seconds, and more preferably from 30 to 120 seconds.

As described above, a certain internal structure is formed in the photocurable composition layer by irradiating low illuminance light for a relatively long time. However, unreacted monomer components may remain by such light irradiation alone to cause stickiness, which may lead to problems with handling properties and durability. In such a case, the remaining monomers may be polymerized by additional light irradiation at a high illuminance of 1,000 $mW/cm^2$ or more. The light irradiation at this time may be carried out from the side opposite to the side on which the mask is stacked.

Further, the average value of normal direction transmission ratios in azimuths can be set to 0.02% or less by conducting heating in the range of about 25°C to 150°C, when the light irradiation is carried out.

Thereafter, the anisotropic light diffusion layer 3 can be obtained by peeling off the substrate.

(Step (ii))

In the step (ii), a surface on the translucent substrate 5 side of the anti-glare layer laminate 9 in which the anti-glare layer 1 is formed on one surface of the translucent substrate 5, and the anisotropic light diffusion layer 3 obtained in the step (i) are adhered together through the transparent pressure-sensitive adhesive layer 7. As a result, the anti-glare film 10 is obtained.

As the anti-glare layer laminate 9, a commercially available product may be used, or a product manufactured by a known production method may be used. The anti-glare layer laminate 9 can be produced by forming the anti-glare layer 1 on one surface of the translucent substrate 5. The method for forming the anti-glare layer 1 is not particularly limited, and may be a known method. For example, methods described in International Patent Publication No. 2005/093468, International Patent Publication No. 2008/093769, Japanese Unexamined Patent Application, First Publication No. 2010-248451, Japanese Unexamined Patent Application, First Publication No. 2011-013238, Japanese Unexamined Patent Application, First Publication No. 2010-256882, and the like can be mentioned.

As the transparent pressure-sensitive adhesive layer 7, a commercially available transparent pressure-sensitive adhesive sheet may be used. It is also possible to use a product manufactured by a known production method.

Although the anti-glare film of the present invention has been described above by way of an embodiment, the present invention is not limited to the above embodiment. The configurations, combinations thereof, and the like in the above embodiment are merely examples, and additions, omissions, substitutions, and other modifications of the configurations are possible without departing from the spirit of the present invention.

For example, as in the anti-glare film 20 shown in FIG. 3, an anti-glare film may be configured without providing the translucent substrate 5 and the transparent pressure-sensitive adhesive layer 7. Such an anti-glare film may be obtained, for example, by directly forming an anti-glare layer on one surface of the anisotropic light diffusion layer.

As in the anti-glare film 30 shown in FIG. 4, an anti-glare film may be configured without providing the transparent pressure-sensitive adhesive layer 7.

Such an anti-glare film may be obtained, for example, by directly forming the anisotropic light diffusion layer 3 on the surface of the translucent substrate 5 on the side opposite to the anti-glare layer 1 side.

The anti-glare film of the present invention may further include another layer other than the anti-glare layer 1, the anisotropic light diffusion layer 3, the translucent substrate 5 and the transparent pressure-sensitive adhesive layer

7. As another layer, for example, a phase difference layer, a light reflecting layer, an optical control layer and the like can be mentioned. Another layer may be provided between the anti-glare layer 1 and the anisotropic light diffusion layer 3 or may be provided on the side opposite to the anti-glare layer 1 side of the anisotropic light diffusion layer 3.

[Display device]

A display device according to the present invention includes the anti-glare film according to the present invention.
Examples of the display device include liquid crystal display devices (LCD), plasma display panels (PDP), organic EL displays, field emission displays (FED), rear projectors, cathode ray tube display devices (CRT), surface electric field displays (SED) and electronic papers.
The display device according to the present invention typically includes a display device main body having a display surface, and the anti-glare film according to the present invention arranged on the display surface of the display device main body. In this case, the anti-glare film according to the present invention is arranged with the surface on the anti-glare layer side facing the viewing side (the side opposite to the display surface side). The anti-glare film may be laminated onto the display surface via a transparent pressure-sensitive adhesive layer or the like.

Examples

The present invention will be more specifically described below with reference to examples and comparative examples, but the present invention is not limited only to these examples.
The methods used for measurement and evaluation in each example are shown below.

(Thickness of anisotropic light diffusion layer)

By using a microtome, a cross section of an anisotropic light diffusion layer (an anti-glare layer laminate in the case of Comparative Example 1, and a laminate of two Lumisty sheets in the case of Comparative Example 2) was formed, the cross section was observed with an optical microscope and thicknesses were measured at 10 places, and the average value of the measured values was taken as the thickness of the anisotropic light diffusion layer.

(Average height of pillar region in thickness direction of anisotropic light diffusion layer)

By using a microtome, a cross section of an anisotropic light diffusion layer was formed, the cross section was observed with an optical microscope and a height in the thickness direction of the anisotropic light diffusion layer was measured for 10 pillar regions, and the average height of the pillar regions was determined as their average value.
From the measurement results, the ratio (%) of the average height (μm) of the pillar regions to the thickness (μm) of the anisotropic light diffusion layer was calculated.

(Normal direction transmission ratio at each azimuthal angle (φ) for incident light with polar angle (θ) of 75°)

Light was made incident from an angle of 75° with respect to the sample normal direction and the light transmitted through the anisotropic light diffusion layer was measured using a gonio-photometer (manufactured by Genesia Corporation), and the normal direction transmission ratio at each azimuthal angle (φ) for the incident light having a polar angle (θ) of 75° was calculated by the following equation.

$$\text{Normal direction transmission ratio} = (\text{transmitted light quantity in the normal direction of the anisotropic light diffusion layer (cd)}) / (\text{transmitted light quantity in a linear direction of incident light (cd)}) \times 100 \qquad (1)$$

A method of measuring the light transmitted through the anisotropic light diffusion layer will be described in more detail with reference to FIGS. 8 to 9.
The xy plane in FIG. 8 is defined as a film surface, and the positive direction of the z axis is defined as an emission surface.
As shown in FIG. 9, a normal line passing through an irradiation point P which is a position where light enters the anisotropic light diffusion layer is defined as the z axis, a polar angle θ is defined as an angle formed between the

z axis and the linear direction of the incident light, and the positive direction of the z axis is defined as $\theta$ = 0°. Further, an azimuthal angle $\varphi$ is defined as an angle on the xy plane, the positive direction of the x axis is defined as $\varphi$ = 0° and the positive direction of the y axis is defined as $\varphi$ = 90°, and the luminosity of the transmitted light in the $\theta$ = 0° direction (normal direction) at the irradiation point P, when the incident light has the angle $\theta$ = 75°, is measured by a detector.

This process is performed from eight directions of $\varphi$ = 0°, 45°, 90°, 135°, 180°, 225°, 270° and 315°, and the average value in the eight directions is determined and taken as an average value of normal direction transmission ratios in the azimuths.

(Scattering central axis angle)

As for the scattering central axis angle, first, as shown in FIG. 6, a detector 202 was fixed at a position where a straight light I is received from a fixed light source 201 using a gonio-photometer (manufactured by Genesia Corporation), and an anisotropic light diffusion layer 110 was set in a sample holder therebetween. As shown in FIG. 6, the anisotropic light diffusion layer 110 was rotated about an axis L parallel to the TD of the anisotropic light diffusion layer 110 serving as the rotation axis L, and the linear transmitted light quantity corresponding to each incident light angle was measured at the wavelength in the visible light region using a luminosity filter.

Based on the optical profile obtained as a result of the above measurement, the incident light angle which had a substantially symmetric property in the optical profile was taken as the scattering central axis angle.

(Thickness of anti-glare film)

The thickness of the anti-glare film was measured by the following procedure. A cross section of the anti-glare film was formed using a microtome, the cross section was observed with an optical microscope, and the length when connecting an apex on the projecting portion surface side of surface unevenness on the anti-glare layer side of the anti-glare film with the surface on the side opposite to the surface unevenness in a direction (thickness direction) perpendicular to the plane of the anti-glare film was measured for 10 projecting portions of the surface unevenness. The average value of these measured values was taken as the thickness of the anti-glare film.

(Scintillation)

A black matrix of 212 ppi was placed on a light box, an anti-glare film was placed thereon, and the illuminance of scintillation was visually confirmed. It was evaluated as × when the scintillation was strong and as ○ when the scintillation was not observed.

(Luminance, contrast)

The surface of the anti-glare film on the side opposite to the anti-glare layer side was adhered on the screen of a liquid crystal display (32 inches, resolution: 1,080 p, liquid crystal mode: VA type) through a colorless and transparent pressure-sensitive adhesive layer, and the front luminance (cd/m$^2$) when the liquid crystal display was in white display and black display modes under dark room conditions was measured with a luminance colorimeter (trade name: SR-UL1R, manufactured by Topcon Corporation).

Using the obtained luminance at the time of black display (black luminance) and the luminance at the time of white display (white luminance), the contrast was calculated by the following equation.

$$\text{Contrast} = (\text{luminance at the time of white display}) / (\text{luminance at the time of black display})$$

The black luminance, the white luminance and the contrast were evaluated according to the following criteria. It should be noted that the luminance (black luminance or white luminance) and the contrast are shown as ratios when the luminance and the contrast measured in a state where the anti-glare film is not adhered onto the liquid crystal display are defined as 1, respectively.

<Evaluation criteria>

The black luminance was evaluated as ◎ when the ratio was less than 1.50, evaluated as ○ when the ratio was 1.50 or more and less than 2.00, evaluated as Δ when the ratio was 2.00 or more and less than 2.50, and evaluated

as × when the ratio was 2.50 or more.

The white luminance was evaluated as ◎ when the ratio was 0.90 or more, evaluated as ○ when the ratio was 0.85 or more and less than 0.90, evaluated as Δ when the ratio was 0.80 or more and less than 0.85, and evaluated as × when the ratio was less than 0.80.

The contrast was evaluated as ◎ when the ratio was more than 0.80, evaluated as ○ when the ratio was more than 0.50 and 0.80 or less, evaluated as Δ when the ratio was more than 0.30 and 0.50 or less, and evaluated as × when the ratio was 0.30 or less.

(Production Examples 1 to 9)

A photocurable resin composition was prepared by mixing 100 parts by mass of EO-modified trimethylolpropane triacrylate (trade name "Light Acrylate TMP-6EO-3A", manufactured by Kyoeisha Chemical Co., Ltd.) and 4 parts by mass of 2-hydroxy-2-methyl-1-phenylpropan-1-one (trade name "Darocure 1173", manufactured by Ciba Specialty Chemicals Inc.).

Subsequently, a partition wall having the same size as the thickness of a desired anisotropic light diffusion layer was formed with a curable resin using a dispenser around the entire circumference of the edge portion of a PET film having a thickness of 100 μm (trade name "A4300", manufactured by Toyobo Co., Ltd.). The photocurable resin composition was filled in a space surrounded by the partition wall and covered with a PET film to obtain a liquid film (both sides of which were sandwiched by the PET films).

Then, the obtained liquid film was heated at a temperature in the range of 25°C to 150°C in order to adjust the average value in azimuths of transmission ratios in the normal direction of the anisotropic light diffusion layer, and parallel UV rays emitted from the epi-illumination unit of a UV spot light source (trade name "L2859-01", manufactured by Hamamatsu Photonics K.K.) were irradiated from above the liquid film for 1 minute at an irradiation illuminance of 5 $mW/cm^2$ from the same direction as that of the scattering central axis of the desired anisotropic light diffusion layer. Depending on the heating temperature of the liquid film, anisotropic light diffusion layers (LCFs 1 to 9) having a large number of pillar structures were obtained. The anisotropic light diffusion layer has the same structure as a single layer structure of the anisotropic optical film.

The thickness of each anisotropic light diffusion layer, the ratio of the average height of pillar regions relative to the thickness of the anisotropic light diffusion layer, the normal direction transmission ratio at each azimuthal angle (φ) for incident light with a polar angle (θ) = 75°, and the scattering central axis angle are shown in Table 1.

In LCFs 1 to 9, the aspect ratio (LA / SA) in the cross-sectional shape perpendicular to the extension direction of the pillar region was calculated by observing the surface of each anisotropic light diffusion layer (the irradiation light side at the time of ultraviolet irradiation) with an optical microscope, and determining the long diameter LA and the short diameter SA from the maximum values among values of twenty arbitrary pillar structures, respectively, and all of which were found to be 1.

(Example 1)

An anti-glare film having the configuration shown in FIG. 1 was produced by the following procedure.

A transparent pressure-sensitive adhesive layer (thickness: 15 μm) formed with a transparent pressure-sensitive adhesive was installed on the surface on the side opposite to an anti-glare layer side of an anti-glare layer laminate (film thickness: 85 μm, arithmetic average roughness of anti-glare layer: Ra = 0.4 μm, internal haze: 1%, external haze: 28%) in which an anti-glare layer was formed on one side of a TAC film (thickness: 80 μm) (translucent substrate 5), and then an anisotropic light diffusion layer (LCF 1) was laminated thereon via the transparent pressure-sensitive adhesive layer to obtain an anti-glare film of Example 1.

(Examples 2 to 9)

The anti-glare films of Examples 2 to 9 were obtained in the same manner as in Example 1 except that the anisotropic light diffusion layer (LCF 1) was changed to anisotropic light diffusion layers (LCFs 2 to 9).

(Comparative Example 1)

The anti-glare layer laminate used in Example 1 was used as an anti-glare film of Comparative Example 1.

Table 1 shows the thickness of this laminate, and the transmission ratio in the normal direction at each azimuthal angle (φ) for incident light with a polar angle (θ) of 75°.

(Comparative Example 2)

Two sheets of Lumisty MFX-1515 (manufactured by Sumitomo Chemical Co., Ltd., film thickness excluding the thickness of pressure-sensitive adhesive layer and that of protective film: 275 μm) of front opaque type were used. In this type, when the view control function is used in the vertical direction, it appears transparent from each direction of 15° or more in the up and down directions, whereas it looks like frosted glass and the other side becomes invisible from the direction within 15° from the front and the entire field of view in the horizontal direction.

When used in this manner, the horizontal direction (direction in which the other side became invisible) was defined as the scattering axis for the sake of convenience, and the second Lumisty sheet was laminated, in a state where the scattering axis thereof was rotated by 90° relative to the first Lumisty sheet, via a transparent pressure-sensitive adhesive layer (film thickness: 15 μm) formed with a transparent pressure-sensitive adhesive to produce a laminate (film thickness: 565 μm). Table 1 shows the thickness of this laminate, and the transmission ratio in the normal direction at each azimuthal angle (φ) for incident light with a polar angle (θ) of 75°.

An anti-glare film of Comparative Example 2 was obtained in the same manner as in Example 1, except that the anisotropic light diffusion layer (LCF 1) was changed to this laminate.

Scintillation, black luminance, white luminance, and contrast were evaluated for the anti-glare films obtained in each example. The results are shown in Table 2.

[Table 1]

| | | | Azimuthal angle (φ) | | | | | | | | | |
|---|---|---|---|---|---|---|---|---|---|---|---|---|
| | | | 0° | 45° | 90° | 135° | 180° | 225° | 270° | 315° | | |
| | Thickness (μm) | Ratio (%) of average height of columnar regions to thickness of anisotropic light diffusion layer | Normal direction transmission ratio (%) at each azimuthal angle (φ) for incident light with polar angle (θ) = 75° | | | | | | | | Average value | Scattering central axis angle (°) |
| LCF 1 | 50 | 97 | 0.0044 | 0.0039 | 0.0035 | 0.0041 | 0.0039 | 0.0039 | 0.0037 | 0.0034 | 0.0039 | 0 |
| LCF 2 | 50 | 97 | 0.0008 | 0.0007 | 0.0007 | 0.0007 | 0.0006 | 0.0006 | 0.0006 | 0.0007 | 0.0007 | 0 |
| LCF 3 | 50 | 97 | 0.0033 | 0.0033 | 0.0021 | 0.0016 | 0.0016 | 0.0020 | 0.0021 | 0.0025 | 0.0023 | 15 |
| LCF 4 | 50 | 97 | 0.0030 | 0.0026 | 0.0009 | 0.0013 | 0.0010 | 0.0012 | 0.0015 | 0.0023 | 0.0017 | 15 |
| LCF 5 | 30 | 97 | 0.0059 | 0.0055 | 0.0034 | 0.0026 | 0.0020 | 0.0027 | 0.0030 | 0.0041 | 0.0037 | 20 |
| LCF 6 | 35 | 97 | 0.0043 | 0.0032 | 0.0012 | 0.0009 | 0.0007 | 0.0009 | 0.0011 | 0.0025 | 0.0018 | 30 |
| LCF 7 | 30 | 97 | 0.0071 | 0.0046 | 0.0020 | 0.0015 | 0.0012 | 0.0017 | 0.0020 | 0.0038 | 0.0030 | 30 |
| LCF 8 | 30 | 97 | 0.0028 | 0.0023 | 0.0010 | 0.0008 | 0.0006 | 0.0008 | 0.0010 | 0.0023 | 0.0014 | 35 |
| LCF 9 | 35 | 97 | 0.0050 | 0.0041 | 0.0011 | 0.0008 | 0.0006 | 0.0008 | 0.0010 | 0.0039 | 0.0022 | 40 |
| Anti-glare layer laminate of Comp. Ex. 1 | 85 | - | 0.0120 | 0.0095 | 0.0102 | 0.0085 | 0.0076 | 0.0070 | 0.0071 | 0.0093 | 0.0089 | - |
| Laminate of Comp. Ex. 2 | 565 | - | 0.0777 | 0.0009 | 0.0696 | 0.0010 | 0.0686 | 0.0009 | 0.0596 | 0.0011 | 0.0349 | - |

[Table 2]

| | Scintillation | Black Luminance | White Luminance | Contrast |
|---|---|---|---|---|
| Ex. 1 | ○ | Δ 2.08 | ○ 0.85 | Δ 0.41 |
| Ex. 2 | ○ | ○ 1.54 | ○ 0.89 | ○ 0.58 |
| Ex. 3 | ○ | Δ 2.42 | Δ 0.80 | Δ 0.33 |
| Ex. 4 | ○ | Δ 2.42 | Δ 0.80 | Δ 0.33 |
| Ex. 5 | ○ | Δ 2.37 | Δ 0.82 | Δ 0.35 |
| Ex. 6 | ○ | ○ 1.83 | ○ 0.87 | Δ 0.47 |
| Ex. 7 | ○ | Δ 2.18 | Δ 0.84 | Δ 0.39 |
| Ex. 8 | ○ | ○ 1.59 | ○ 0.88 | ○ 0.56 |
| Ex. 9 | ○ | ○ 1.66 | ○ 0.88 | ○ 0.53 |
| Comp. Ex. 1 | × | ◎ 1.05 | ◎ 0.95 | ◎ 0.90 |
| Comp. Ex. 2 | ○ | × 2.66 | × 0.79 | × 0.30 |

In Examples 1 to 9, scintillation (glare) was suppressed as compared with Comparative Example 1. Further, compared to Comparative Example 2, the black luminance was lower, and the front contrast was improved.

As a reason for such a result, it can be mentioned that the average value of normal direction transmission ratios in the plane azimuth was low.

The cases of Examples 1 and 2 (where the pillar region is not tilted) were characterized in that the scattering properties were strong at around $\theta = 0°$, and the scattering properties were weak in other portions.

Therefore, it is considered that since the scattering properties were weak and the components standing up at the front were small when the azimuthal angle $\varphi$ was varied at a polar angle $\theta$ of 75°, the average value of normal direction transmission ratios in the plane azimuth became low.

The cases of Examples 3 to 9 (where the pillar region was inclined in the X-axis direction in FIG. 9) were characterized in that the scattering properties were observed at around $\theta = 0°$, the scattering properties were strong in the vicinity of the respective scattering central axis angles (related to $\theta$) in the examples and $\varphi = 0°$, and the scattering properties were weak in other portions.

Therefore, it is considered that since the scattering properties were weak and the components standing up at the front were small because the difference with the region where the scattering properties were strong (in the vicinity of the respective scattering central axis angles (related to $\theta$) in the examples and $\varphi = 0°$) was relatively large when the azimuthal angle $\varphi$ was varied at a polar angle $\theta$ of 75°, the average value of the normal direction transmission ratios in the plane azimuth became low.

On the other hand, the case of Comparative Example 2 (laminate of scattering control films) was characterized in that the scattering properties were strong at around $\theta = 0°$, and in the case where $\theta$ was inclined, the scattering properties were very strong at around $\varphi = 0°$, 90°, 180° and 270°, and the scattering properties were weak at around $\varphi = 45°$, 135°, 225° and 315°.

Therefore, it is considered that since the scattering properties were very strong and the components standing up at the front were large at around $\theta = 75°$ and $\varphi = 0°$, 90°, 180° and 270°, and the scattering properties were weak and the components standing up at the front were small at around $\theta = 75°$ and $\varphi = 45°$, 135°, 225° and 315°, the average value of the normal direction transmission ratios in the plane azimuth became high as a whole.

INDUSTRIAL APPLICABILITY

According to the present invention, it is possible to provide an anti-glare film which can suppress the occurrence of scintillation and the decrease in front contrast in a display device, and a display device using the same.

REFERENCE SIGNS LIST

1: Anti-glare layer; 1a: First surface; 1b: Second surface; 3: Anisotropic light diffusion layer; 5: Translucent substrate; 7: Transparent pressure-sensitive adhesive layer; 9: Anti-glare layer laminate; 10, 20, 30: Anti-glare film; 31: Matrix region; 33: Pillar region; 110: Anisotropic light diffusion layer; 111: Matrix region; 113: Bar-like pillar region (columnar structure); 120: Anisotropic light diffusion layer; 121: Matrix region; 123: Plate-like region (tabular structure)

## Claims

1. An anti-glare film comprising at least:

   an anti-glare layer in which a first surface is an uneven surface; and
   an anisotropic light diffusion layer provided on a side of a second surface opposite to a side of the first surface of the anti-glare layer,
   wherein
   the anisotropic light diffusion layer comprises a matrix region and a plurality of pillar regions having refractive indices different from a refractive index of the matrix region, and
   the pillar regions extend from one surface side toward another surface side of the anisotropic light diffusion layer, and an average height of the pillar regions in a thickness direction of the anisotropic light diffusion layer is 80% or more of a thickness of the anisotropic light diffusion layer.

2. The anti-glare film according to Claim 1,
   wherein an average value of normal direction transmission ratios in azimuths determined by formula (I) when a light is made incident on the anisotropic light diffusion layer at an angle inclined by 75° from a normal direction of the anisotropic light diffusion layer is 0.02% or less,
   the normal direction transmission ratio = (transmitted light quantity in the normal direction of the anisotropic light diffusion layer (cd)) / (transmitted light quantity in a linear direction of the incident light (cd)) $\times$ 100 (I)

3. The anti-glare film according to Claim 1 or 2, wherein an arithmetic average roughness (Ra) of the first surface of the anti-glare layer is from 0.05 $\mu$m to 1.00 $\mu$m.

4. The anti-glare film according to any one of Claims 1 to 3, wherein a thickness of the anti-glare layer is from 1 to 25 $\mu$m, and a thickness of the anisotropic light diffusion layer is from 10 to 200 $\mu$m.

5. The anti-glare film according to any one of Claims 1 to 4,
   wherein the anisotropic light diffusion layer has a scattering central axis, and
   a scattering central axis angle which is a polar angle $\theta$ formed between a normal line of the anisotropic light diffusion layer and the scattering central axis is from -45° to + 45°.

6. A display device comprising an anti-glare film of any one of Claims 1 to 5.

FIG. 1

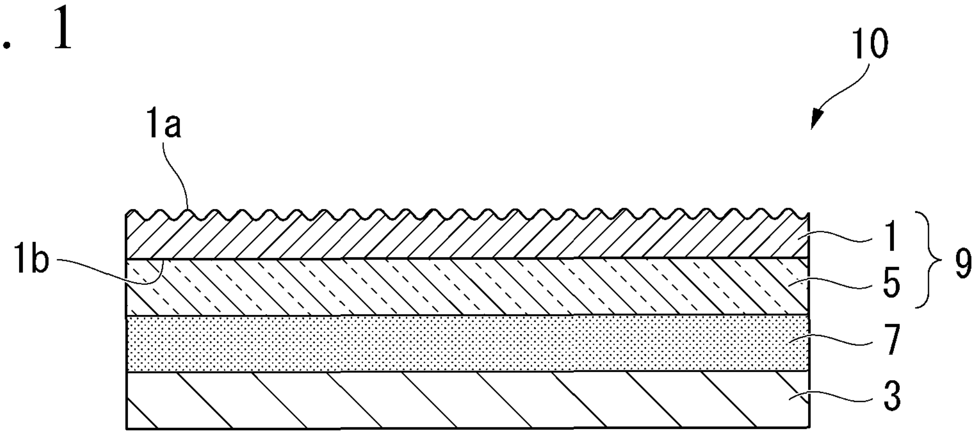


FIG. 2

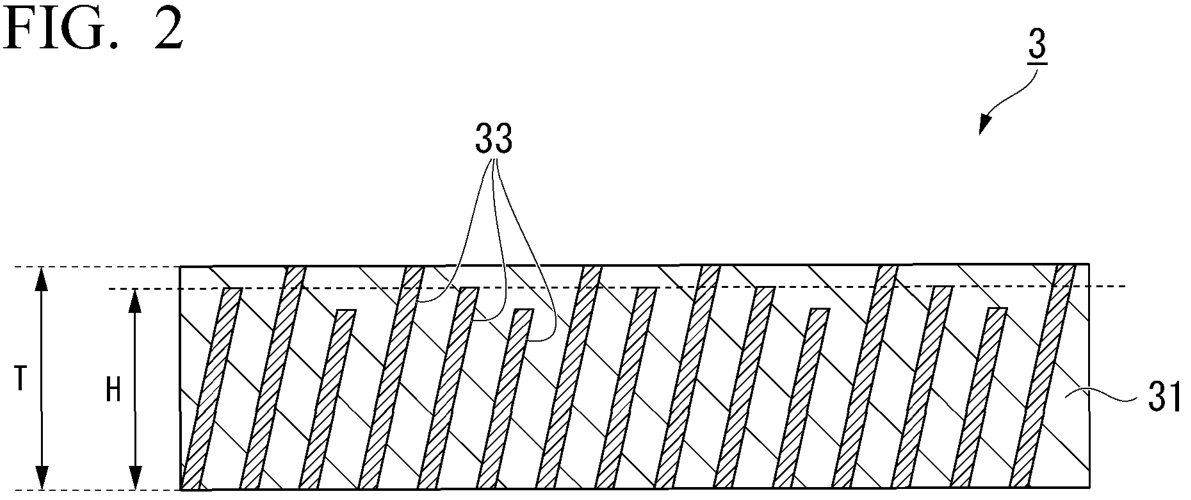

FIG. 3

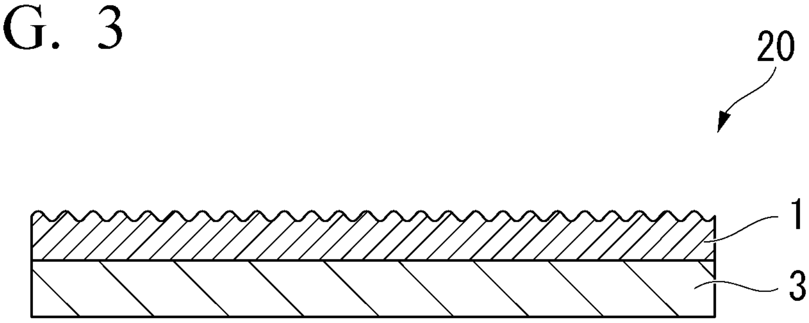


FIG. 4

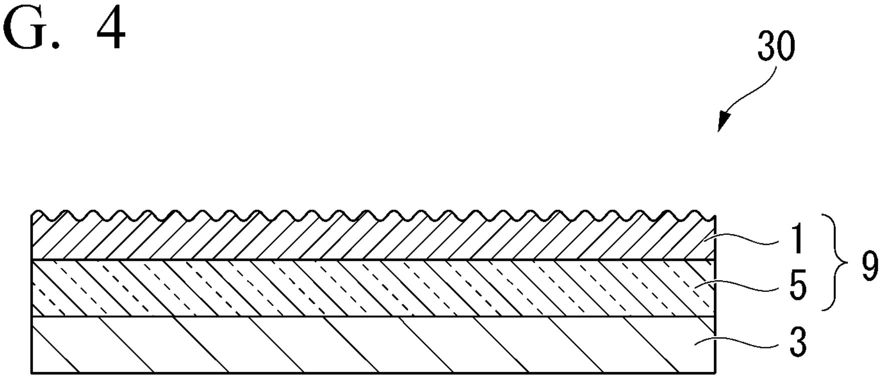

FIG. 5A

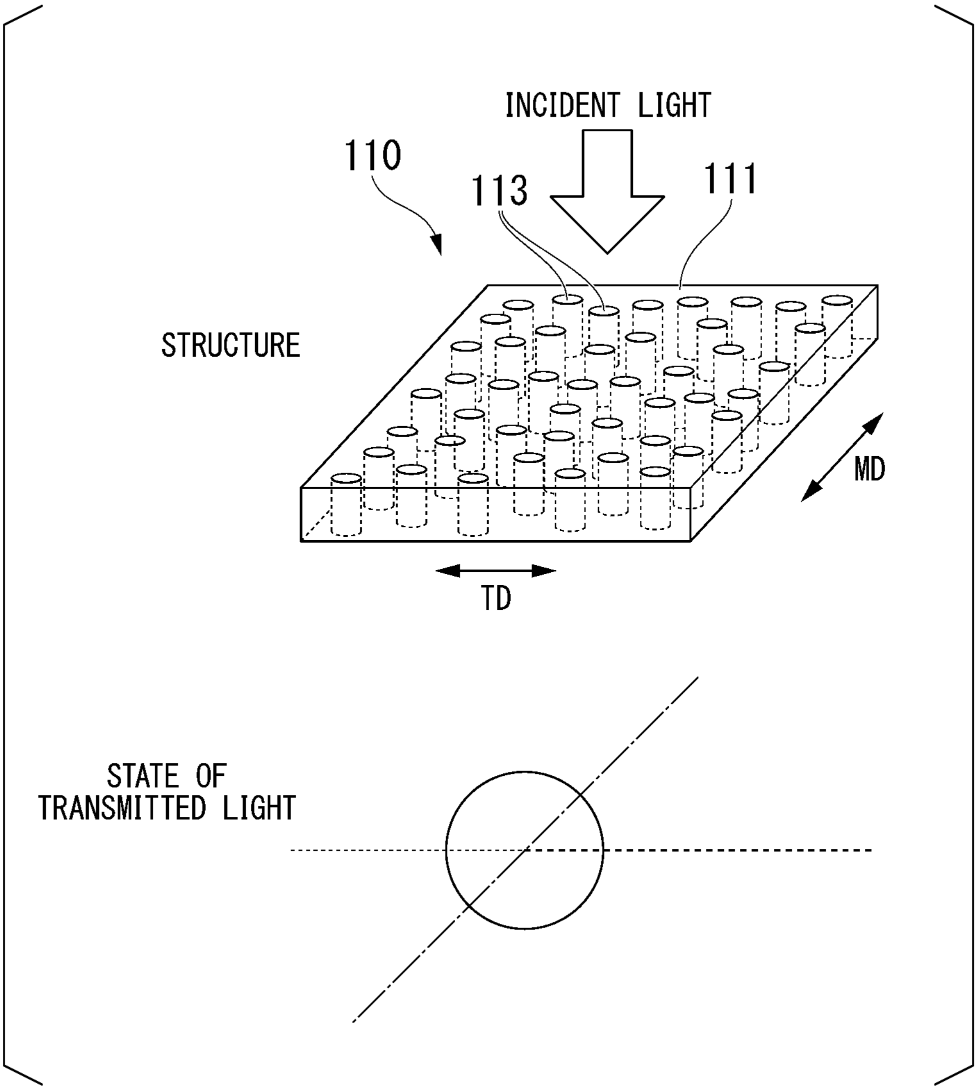
INCIDENT LIGHT
110
113
111
STRUCTURE
MD
TD
STATE OF
TRANSMITTED LIGHT

FIG. 5B

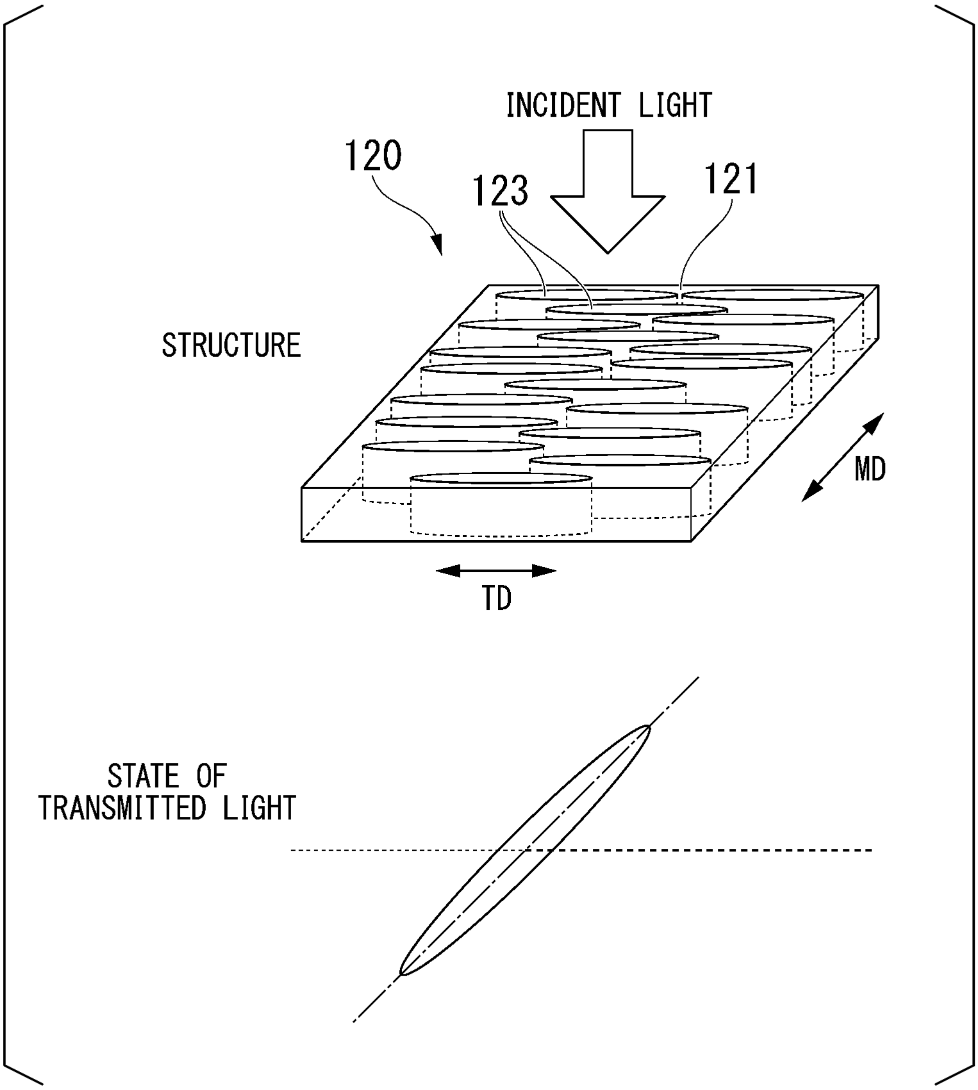
INCIDENT LIGHT
120
123
121
STRUCTURE
MD
TD
STATE OF TRANSMITTED LIGHT

FIG. 6

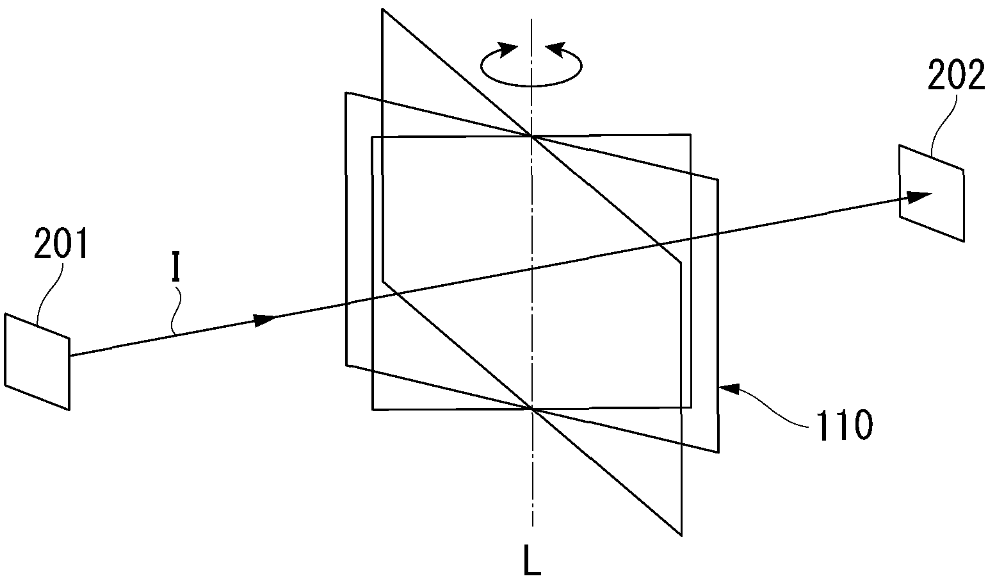

FIG. 7

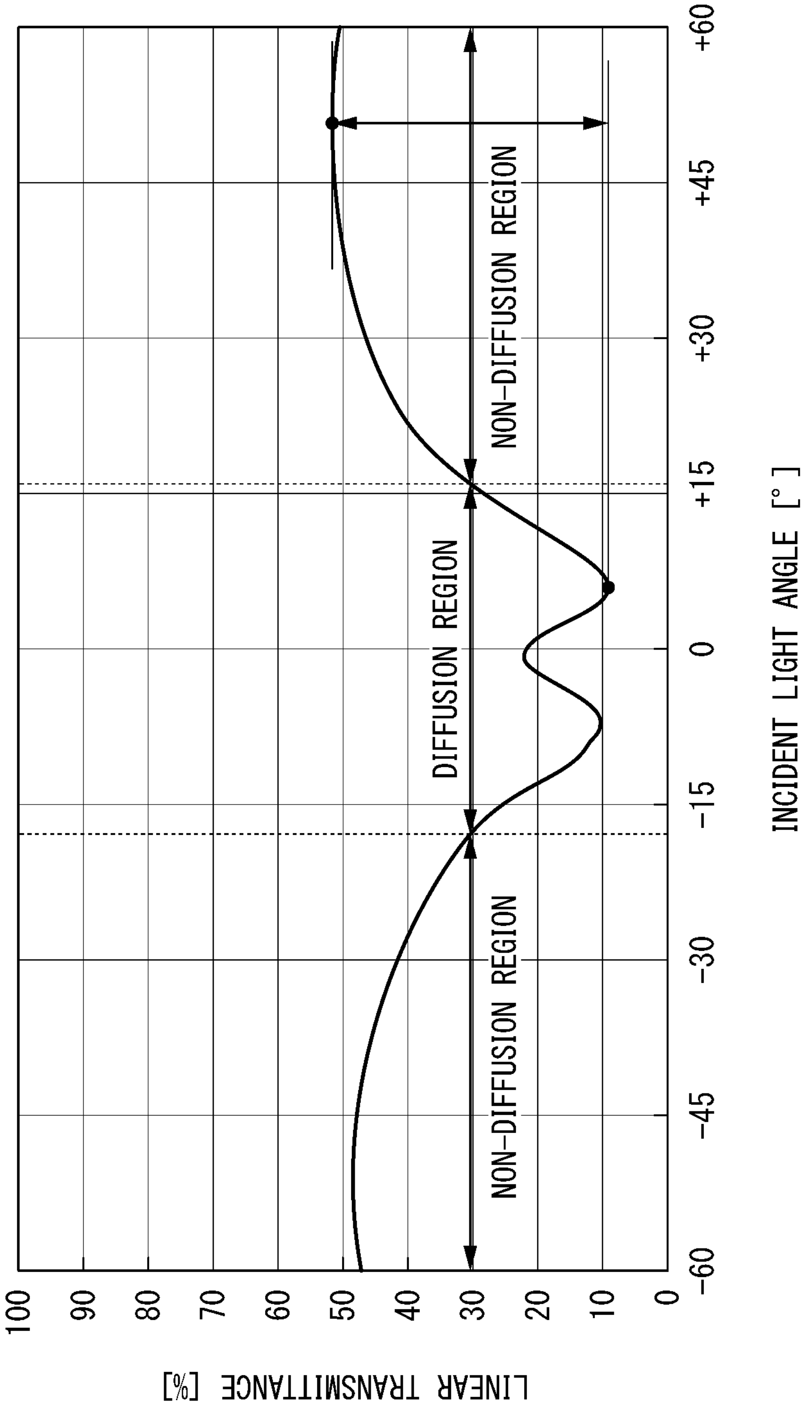
LINEAR TRANSMITTANCE [%]
100
90
80
70
60
50
40
30
20
10
0
-60
-45
-30
-15
0
+15
+30
+45
+60
INCIDENT LIGHT ANGLE [°]
NON-DIFFUSION REGION
DIFFUSION REGION
NON-DIFFUSION REGION

FIG. 8

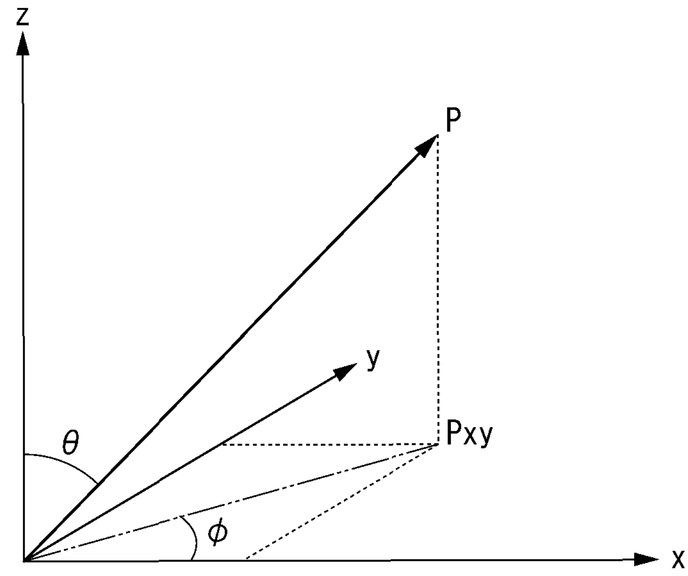


FIG. 9

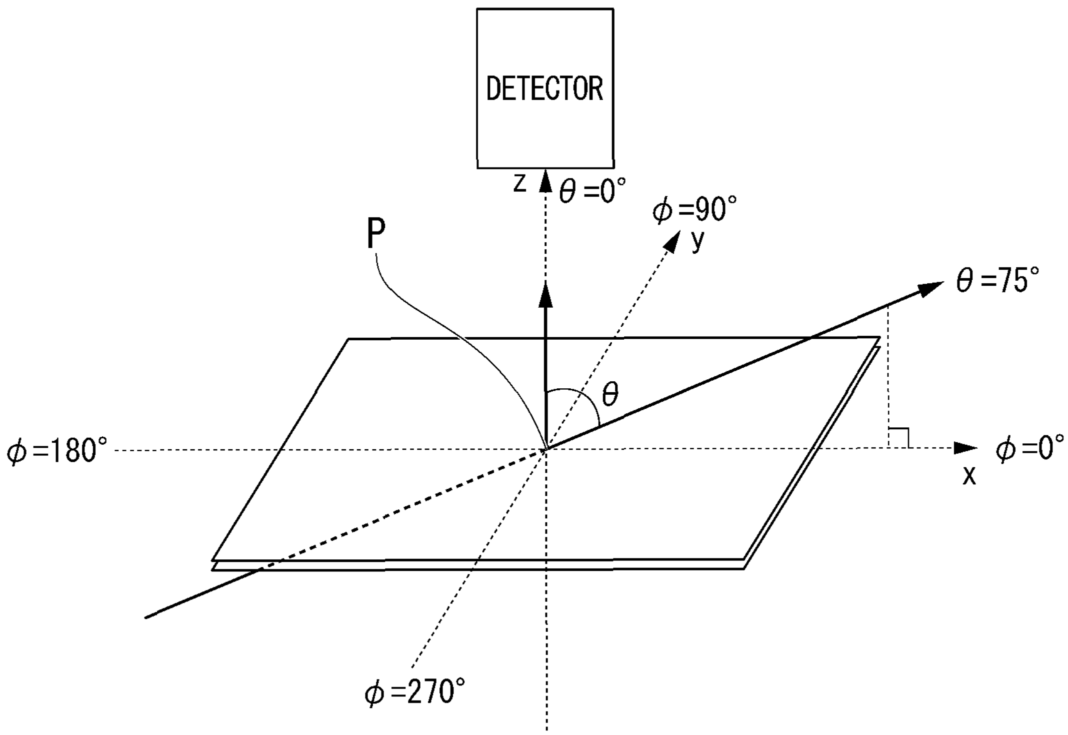

**INTERNATIONAL SEARCH REPORT**

International application No. PCT/JP2018/010212

A. CLASSIFICATION OF SUBJECT MATTER
Int. Cl. G02B5/02(2006.01)i, G02F1/1335(2006.01)i, G09F9/00(2006.01)i

According to International Patent Classification (IPC) or to both national classification and IPC

B. FIELDS SEARCHED

Minimum documentation searched (classification system followed by classification symbols)
Int. Cl. G02B5/02, G02F1/1335, G09F9/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-249181 A (SHARP CORP.) 27 September 2007, paragraphs [0035], [0076]-[0122], [0136], fig. 2, 7 & US 2007/0195233 A1, paragraphs [0192], [0193], [0250]-[0295], [0310], fig. 2, 7 & KR 10-2007-0082881 A & TW 200732768 A & CN 101025512 A | 1-6 |
| Y | JP 2007-249182 A (SHARP CORP.) 27 September 2007, paragraphs [0035], [0076]-[0115], [0120]-[0126], [0141], fig. 2, 7 & US 2007/0195233 A1, paragraphs [0192], [0193], [0315]-[0326], [0332]-[0334], [0346], fig. 2, 7 & KR 10-2007-0082881 A & TW 200732768 A & CN 101025512 A | 1-6 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 24.05.2018 | 05.06.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2018/010212

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-202416 A (SHARP CORP.) 18 July 2003, paragraphs [0017], [0042]-[0048] & US 2003/0081320 A1, paragraphs [0025], [0066]-[0072] & TW 561274 B & KR 10-2003-0033954 A & CN 1414401 A | 1-6 |
| Y | JP 2000-338310 A (DAINIPPON PRINTING CO., LTD.) 08 December 2000, paragraphs [0004], [0027]-[0034] & US 2002/0150722 A1 & US 2004/0150874 A1, paragraphs [0009], [0084]-[0096] & US 2006/0159902 A1 & KR 10-2001-0049433 A | 3-4 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017069529 A
- JP 2001091707 A
- JP 2003202416 A
- JP 2007304436 A
- JP 2015191178 A
- JP 2005265915 A
- JP 2005514487 PCT
- JP 2005292219 A
- WO 2005093468 A
- WO 2008093769 A
- JP 2010248451 A
- JP 2011013238 A
- JP 2010256882 A